(19) Europäisches Patentamt
European Patent Office
Office européen des brevets

(11) Veröffentlichungsnummer: **0 382 177**
**A1**

(12) # EUROPÄISCHE PATENTANMELDUNG

(21) Anmeldenummer: **90102357.2**

(22) Anmeldetag: **07.02.90**

(51) Int. Cl.5: **C09B 62/507, D06P 1/384**

(30) Priorität: **10.02.89 DE 3903995**

(43) Veröffentlichungstag der Anmeldung:
**16.08.90 Patentblatt 90/33**

(84) Benannte Vertragsstaaten:
**BE CH DE ES FR GB IT LI**

(71) Anmelder: **HOECHST AKTIENGESELLSCHAFT**
**Postfach 80 03 20**
**D-6230 Frankfurt am Main 80(DE)**

(72) Erfinder: **Büch, Holger Michael, Dr.**
**Neugasse 4**
**D-6238 Hofheim am Taunus(DE)**
Erfinder: **Springer, Hartmut, Dr.**
**Am Erdbeerstein 27**
**D-6240 Königstein/Taunus(DE)**
Erfinder: **Geisenberger, Josef, Dr.**
**Im Haindell 5**
**D-6231 Sulzbach(DE)**

(54) **Wasserlösliche Azoverbindungen, Verfahren zu ihrer Herstellung und ihre Verwendung als Farbstoffe.**

(57) Azoverbindungen, die der nachstehend definierten allgemeinen Formel (1) entsprechen, und deren Schwermetallkomplexverbindungen, wie Kupfer-, Kobalt- und Chromkomplex-Verbindungen, stellen faserreaktive Farbstoffe dar, die carbonamidgruppenhaltige und/oder hydroxygruppenhaltige Materialien, wie beispielsweise synthetische Polyamidfasermaterialien, Wolle und insbesondere Cellulosefasermaterialien, in farbstarken, echten Tönen mit hohem Fixiergrad zu färben vermögen.

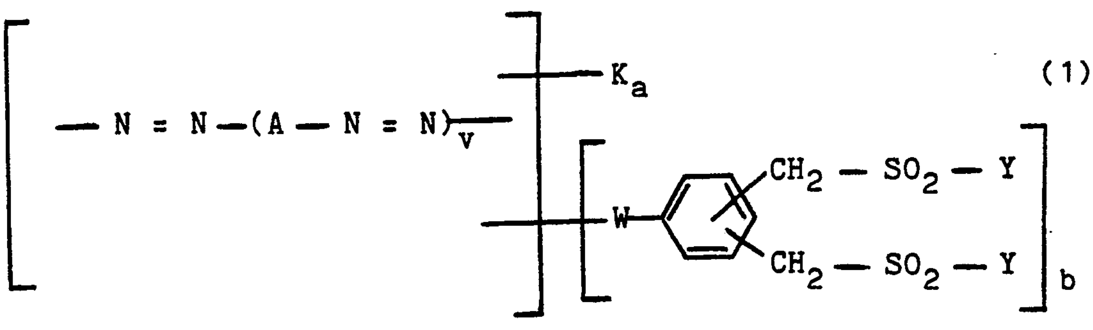

(1)

in welcher bedeuten:
A ist der bivalente Rest einer kupplungsfähigen und diazotierbaren Mittelkomponente der Benzol-, Pyrazolon-oder Naphthalinreihe, der durch in der Azochemie übliche Substituenten substituiert sein kann, oder ist der bivalente Rest einer zweifach ankuppelbaren Kupplungskomponente, der durch in der Azochemie übliche Substituenten substituiert sein kann;
v steht für die Zahl Null oder 1;
K ist der Rest einer Kupplungskomponente der Benzol-, Naphthalin-, Pyrazolon-, 6-Hydroxy-2-pyridon- oder Acetoacetylarylamid-Reihe, der gegebenenfalls durch in der Azochemie übliche Substituenten substituiert sein kann;
W ist eine direkte kovalente Bindung oder eine Gruppe der Formel (2)

EP 0 382 177 A1

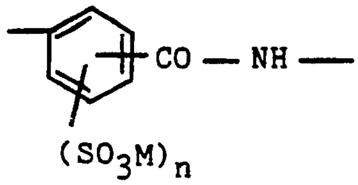

(2)

in welcher M die obengenannte Bedeutung hat und n für die Zahl Null, 1 oder 2 steht,
a steht für die Zahl Null oder 1;
b steht für die Zahl 1 oder 2;
Y ist die Vinylgruppe oder ist die Ethylgruppe, die in ß-Stellung durch einen Substituenten substituiert ist, der mittels Alkali unter Bildung der Vinylgruppe eliminierbar ist.

# Wasserlösliche Azoverbindungen, Verfahren zu ihrer Herstellung und ihre Verwendung als Farbstoffe

Der Erfindung liegt auf dem technischen Gebiet der faserreaktiven Farbstoffe.

Aus den Europäischen Patentanmeldungs-Veröffentlichungen Nrs. 0 107 614A und 0 181 585A sind faserreaktive Azoverbindungen bekannt, deren Diazokomponente zwei ß-Sulfatoethylsulfonyl-Gruppen enthalten. Ihre anwendungstechnischen Eigenschaften sind jedoch nicht vollauf befriedigend. So werden an Farbstoffe für das Färben von Baumwolle nach den verschiedenen Klotzverfahren, wie dem Klotz-Kurzverweil-Verfahren, dem Einbad-Klotz-Dämpf-Verfahren, dem Zweibad-Klotz-Aufdock-Verfahren und dem Zweibad-Klotz-Dämpf-Verfahren, faserreaktive Farbstoffe gefordert, die eine ausreichende, der niedrigen Färbetemperatur angepaßte Substantivität haben und die zugleich eine gute Auswaschbarkeit der nicht fixierten Anteile aufweisen. Ferner sollten sie eine hohe Reaktivität besitzen, so daß nur kurze Verweilzeiten erforderlich sind, und insbesondere einen hohen Fixiergrad.

Der vorliegenden Erfindung lag daher die Aufgabe zugrunde, neue Azoverbindungen mit verbesserten faserreaktiven Farbstoffeigenschaften für das Klotzverfahren zu finden, die die oben genannten Qualitäten in hohem Maße besitzen. Die neuen Farbstoffe sollten sich vor allem durch hohe Fixierausbeuten und hohe Faser-Farbstoff-Bindungsstabilitäten auszeichnen, und nicht fixierte Anteile auf der Faser sollten leicht auswaschbar sein.

Mit der vorliegenden Erfindung wurde diese Aufgabe durch Auffindung der Verbindungen der allgemeinen Formel (1) und deren Schwermetallkomplexe, wie 1:1-Kupferkomplex-, 1:2-Chromkomplex- und 1:2-Kobaltkomplex-Derivate, gelöst.

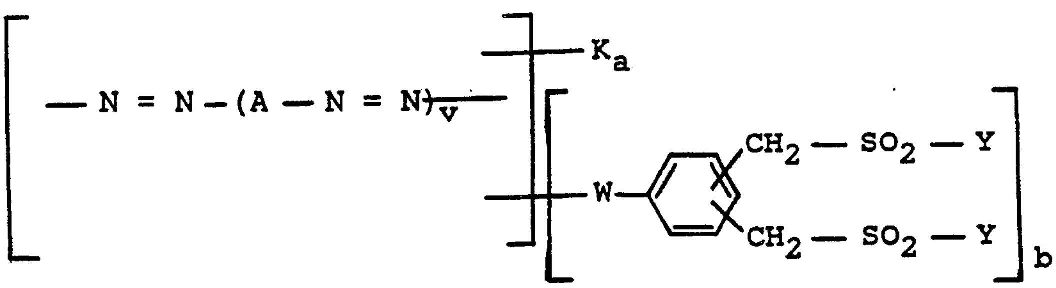

(1)

In dieser Formel bedeuten:

A ist der bivalente Rest einer kupplungsfähigen und diazotierbaren Mittelkomponente der Benzol-, Pyrazolon-oder Naphthalinreihe, der durch in der Azochemie übliche Substituenten substituiert sein kann, wie beispielsweise durch einen oder mehrere Substituenten aus der Gruppe Hydroxy, Amino, Alkyl von 1 bis 4 C-Atomen, wie Methyl und Ethyl, Alkoxy von 1 bis 4 C-Atomen, wie Methoxy und Ethoxy, gegebenenfalls substituiertes Alkanoylamino mit 2 bis 4 C-Atomen, gegebenenfalls substituiertes Benzoylamino, Halogen, wie Brom und Chlor, Carboxy und Sulfo, oder ist der bivalente Rest einer zweifach ankuppelbaren Kupplungskomponente, der durch in der Azochemie übliche Substituenten substituiert sein kann, wie beispielsweise solche der oben genannten Gruppe;

v steht für die Zahl Null oder 1;

K ist der Rest einer Kupplungskomponente der Benzol-, Naphthalin-, Pyrazolon-, 6-Hydroxy-2-pyridon- oder Acetoacetylarylamid-Reihe, der durch in der Azochemie übliche Substituenten substituiert sein kann, wie beispielsweise durch einen oder mehrere Substituenten aus der Gruppe Hydroxy, Amino, Alkyl von 1 bis 4 C-Atomen, wie Methyl und Ethyl, Alkoxy von 1 bis 4 C-Atomen, wie Methoxy und Ethoxy, gegebenenfalls substituiertes Alkanoylamino mit 2 bis 4 C-Atomen, gegebenenfalls substituiertes Benzoylamino, Halogen, wie Brom und Chlor, Carboxy und Sulfo;

W ist eine direkte kovalente Bindung oder eine Gruppe der allgemeinen Formel (2)

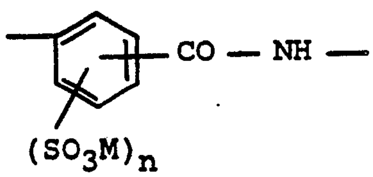

(2)

in welcher
M ein Wasserstoffatom oder ein Alkalimetall, wie Lithium, Natrium und Kalium, ist und
m die Zahl Null, 1 oder 2 ist (wobei die Gruppe im Falle von n gleich Null ein Wasserstoffatom bedeutet) und die Carbonylamidgruppe bevorzugt in meta- oder para-Stellung zur mit der Azogruppe verbundenen freien Bindung an den Benzolkern gebunden ist;
a steht für die Zahl Null oder 1;
b steht für die Zahl 1 oder 2;
Y ist die Vinylgruppe oder ist die Ethylgruppe, die in ß-Stellung durch einen Substituenten substituiert ist, der mittels Alkali unter Bildung der Vinylgruppe eliminierbar ist.

Erfindungsgemäße Azoverbindungen entsprechend der allgemeinen Formel (1) sind insbesondere solche Mono- und Disazoverbindungen, die den allgemeinen Formeln (3a) und (3b)

$D - N = N -(E - N = N)_v - K$ (3a)

$D^o - N = N - G - N = N - D^o$ (3b)

und den davon abgeleiteten Schwermetallkomplex-Verbindungen entsprechen, wobei in diesen Formeln bedeuten:
K und v haben die oben genannten Bedeutungen;
D ist der Rest der allgemeinen Formel (4)

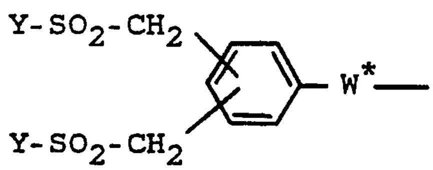

(4)

in welcher Y die obengenannte Bedeutung hat und W* eine direkte Bindung oder eine Gruppe der allgemeinen Formel (2a)

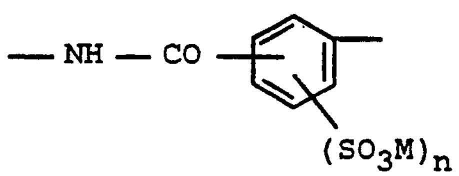

(2a)

mit M und n der obengenannten Bedeutung ist;
E ist der Rest einer kupplungs- und diazotierbaren Verbindung, die zum Aufbau von Disazoverbindungen mit Farbstoffeigenschaften üblicherweise eingesetzt wird und die der Benzol-, Pyrazolon- oder Naphthalinreihe angehört und durch einen oder mehrere Substituenten aus der Gruppe Hydroxy, Amino, Alkyl von 1 bis 4 C-Atomen, Alkoxy von 1 bis 4 C-Atomen, gegebenenfalls substituiertes Alkanoylamino mit 2 bis 4 C-Atomen, gegebenenfalls substituiertes Benzoylamino, Ureido, Halogen, Carboxy und Sulfo substituiert sein kann;
$D^o$ stellt jedes, zueinander gleich oder voneinander verschieden, einen Rest der oben definierten Gruppe D dar, oder einer der Reste $D^o$ ist eine Gruppe D und der andere Rest $D^o$ ist ein Benzolrest oder ein Naphthalinrest, die beide durch in der Azochemie übliche Substituenten, wie beispielsweise einen oder mehrere Substituenten aus der Gruppe Hydroxy, Alkyl von 1 bis 4 C-Atomen, Alkoxy von 1 bis 4 C-Atomen, Alkanoylamino mit 2 bis 4 C-Atomen, gegebenenfalls substituiertes Benzoylamino, Halogen, wie Chlor und Brom, Nitro, Carboxy und Sulfo und/oder durch eine oder zwei faserreaktive Gruppen, wie beispielsweise aus der heterocyclischen Reihe oder Gruppen der Formel $-SO_2-Y$ mit Y einer der oben genannten Bedeutungen, substituiert sein können;
G ist der bivalente Rest einer zweifach kuppelbaren Kupplungskomponente der Benzol- oder Naphthalinreihe, der durch Hydroxy- und/oder Aminogruppen substituiert ist und durch weitere Substituenten, wie beispielsweise einen oder mehrere Substituenten aus der Gruppe Alkyl von 1 bis 4 C-Atomen, Alkoxy von 1 bis 4 C-Atomen, Sulfo, Carboxy, Ureido, Alkanoylamino mit 2 bis 4 C-Atomen und Halogen, wie Chlor und Brom, substituiert sein kann.

Mittelkomponenten der Formel H-A-H bzw. H-E-H sind beispielsweise solche, die den später genannten und definierten allgemeinen Formeln (7) entsprechen. Zweifach ankuppelbare Verbindungen, die als Mittelkomponenten dienen können und den allgemeinen Formeln H-A-H bzw. H-G-H entsprechen, sind

beispielsweise 1-Amino-8-naphthol-3,6- oder -4,6-disulfonsäure, Resorcin und 5,5′-Dihydroxy-7,7′-disulfo-2,2′-dinaphthylharnstoff.

ß-Substituierte Ethylgruppen, die unter Abspaltung des ß-Substituenten in die Vinylgruppe übergehen und dem Formelrest Y entsprechen, sind beispielsweise die ß-Chlorethyl-, ß-Sulfatoethyl-, ß-Thiosulfatoethyl-, ß-Acetyloxyethyl- und die ß-Phosphatoethyl-Gruppe.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Thiosulfatogruppen Gruppen entsprechend der allgemeinen Formel $-S-SO_3M$ , Phosphatogruppen Gruppen entsprechend der allgemeinen Formel $-OPO_3M_2$ und Sulfatogruppen Gruppen entsprechend der allgemeinen Formel $-OSO_3M$ , jeweils mit M der obengenannten Bedeutung.

Von den erfindungsgemäßen Verbindungen der allgemeinen Formeln (3) und deren Schwermetallkomplex-Derivaten sind weiterhin diejenigen hervorzuheben, die den allgemeinen Formeln (5a), (5b), (5c) und (5d)

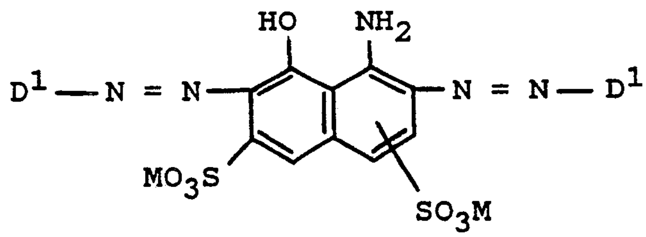

(5a)

$$D - N = N -(E^1 - N = N)_v - K \qquad (5b)$$

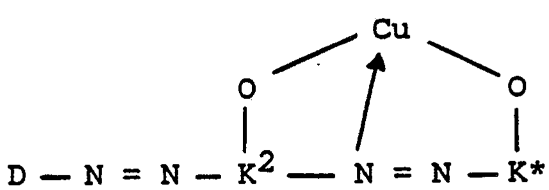

(5c)

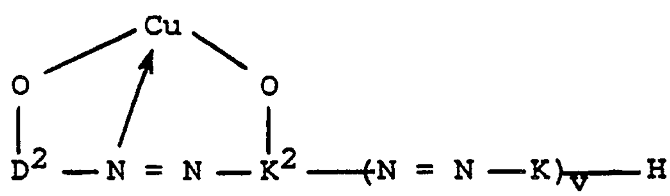

(5d)

entsprechen, in welchen bedeuten:

D, M und v haben die oben genannten Bedeutungen;

K* hat eine der Bedeutungen von K, sofern K in Nachbarstellung zur Kupplungsstelle eine Hydroxygruppe besitzt;

$D^1$ ist jedes, zueinander gleich oder voneinander verschieden, ein Rest D der oben genannten und definierten allgemeinen Formel (4), oder der eine Rest $D^1$ ist eine Gruppe D und der andere Rest $D^1$ ist ein Rest der allgemeinen Formel (6a), (6b) oder (6c)

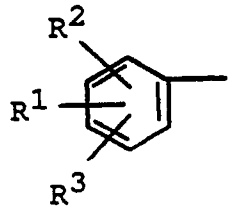 (6a)

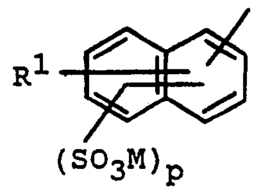 (6b)

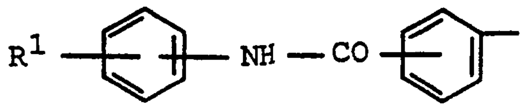 (6c)

in welchen
$R^1$ ein Wasserstoffatom oder eine Sulfogruppe oder eine Gruppe der Formel Y-$SO_2$- mit Y der oben genannten Bedeutung ist,
$R^2$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyano, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet (wobei diese Gruppe im Falle von p gleich Null ein Wasserstoffatom bedeutet) und
M die obengenannte Bedeutung hat;
$E^1$ ist ein Rest der allgemeinen Formel (7a), (7b), (7c) oder (7d)

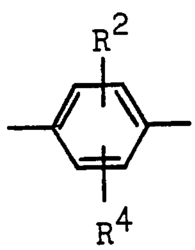 (7a) ,

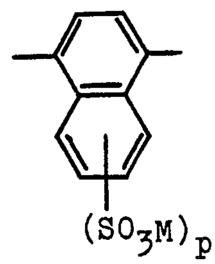 (7b)

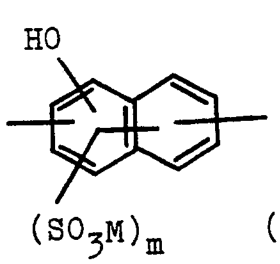 (7c)

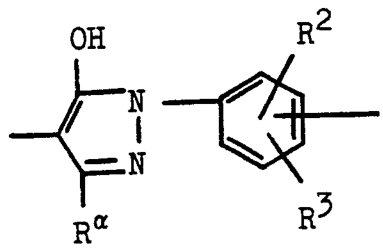 (7d)

in welchen
$R^2$, $R^3$, M und p die oben angegebenen Bedeutungen haben,
$R^4$ ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine N′-Phenyl-ureidogruppe, eine N′-Alkyl-ureidogruppe mit 1 bis 4 C-Atomen im Alkylrest, eine Phenylsulfonylgruppe oder eine Alkylsulfonylgruppe von 1 bis 4 C-Atomen ist,
m die Zahl 1 oder 2 bedeutet und
$R^\alpha$ für Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl steht, bevorzugt jedoch Methyl, Carboxy und Carbalkoxy von 2 bis 5 C-Atomen ist;
$D^2$ ist ein Rest der allgemeinen Formel (4A) oder (4B)

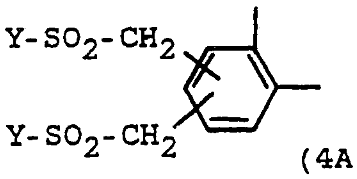
(4A)

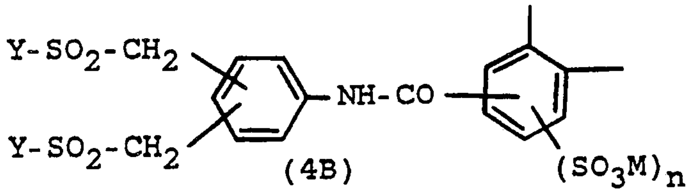
(4B)

mit Y, M und n den obengenannten Bedeutungen;
$K^2$ ist ein Rest der allgemeinen Formel (8a) oder (8b)

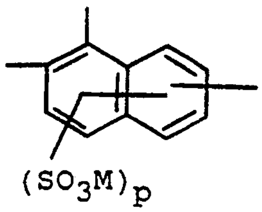
(8a)

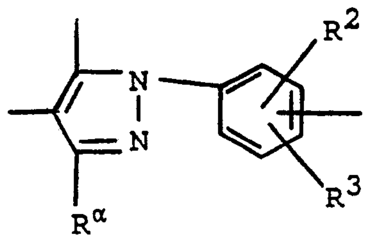
(8b)

in welchen M, p, $R^2$, $R^3$ und $R^\alpha$ die obengenannten Bedeutungen haben.
Bevorzugt ist K ein Rest der allgemeinen Formel (9a) bis (9g)

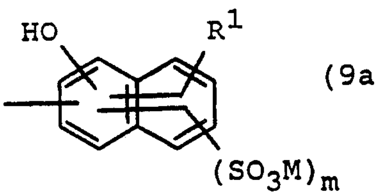
(9a)

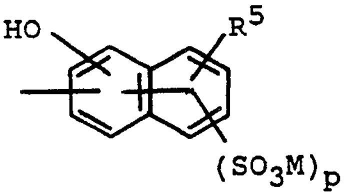
(9b)

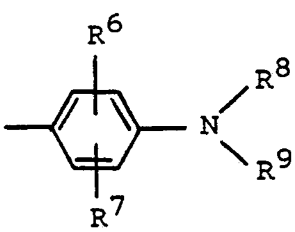
(9c)

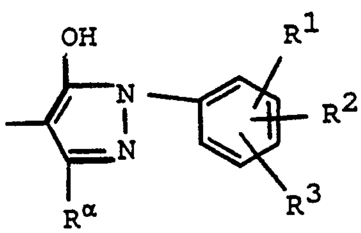
(9d)

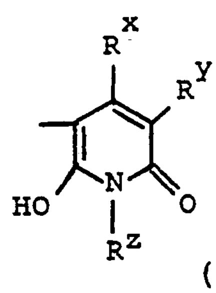
(9e)

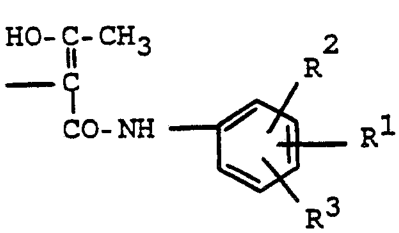
(9f)

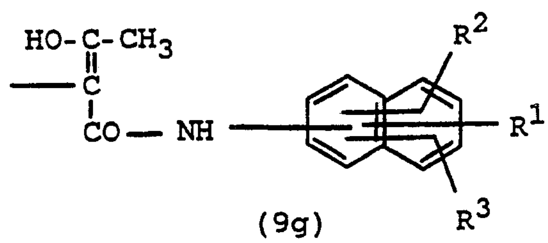
(9g)

in welchen
$R^1$, $R^2$, $R^3$, $R^\alpha$, m, p und M die obengenannten Bedeutungen haben,
$R^5$ Alkylureido mit Alkylgruppen von 1 bis 6 C-Atomen, Phenylureido, im Phenylrest durch Chlor, Methyl,

Methoxy, Nitro, Sulfo und/oder Carboxy substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy und/oder durch $-SO_2-Y$ mit Y obiger Bedeutung substituiertes Benzoylamino ist,

$R^6$ Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,

$R^7$ Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, eine Ureido- oder Phenylureidogruppe ist,

$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist und

$R^x$ ein Wasserstoffatom oder eine Alkylgruppe von 1 bis 4 C-Atomen, wie die Methylgruppe, oder eine durch Alkoxy von 1 bis 4 C-Atomen, wie Methoxy, oder Cyano substituierte Alkylgruppe von 1 bis 4 C-Atomen ist,

$R^y$ ein Wasserstoffatom, eine Sulfogruppe oder eine Sulfoalkylgruppe mit einem Alkylenrest von 1 bis 4 C-Atomen, wie die Sulfomethylgruppe, oder eine Cyano- oder Carbamoylgruppe ist und

$R^z$ ein Wasserstoffatom oder eine Alkylgruppe von 1 bis 6 C-Atomen, bevorzugt von 1 bis 4 C-Atomen ist, die durch Phenyl, Sulfo, Sulfato, Carboxy, Sulfophenyl, Hydroxy, Amino, Methoxy, Ethoxy, Acetylamino, Benzoylamino oder Cyano substituiert sein kann, oder ist Cyclohexyl, Phenyl oder durch Carboxy, Sulfo, Benzoylamino, Acetylamino, Methyl, Methoxy, Cyano und/oder Chlor substituiertes Phenyl.

Bevorzugt ist K* der HO-freie Rest der Formeln (9a), (9b) und (9d).

Von diesen Azoverbindungen sind besonders bevorzugt solche entsprechend der allgemeinen Formel D-N = N-K mit D und K der obengenannten Bedeutung.

Von den erfindungsgemäßen Azoverbindungen der allgemeinen Formel (1) sind insbesondere solche hervorzuheben, die der allgemeinen Formel (10a)

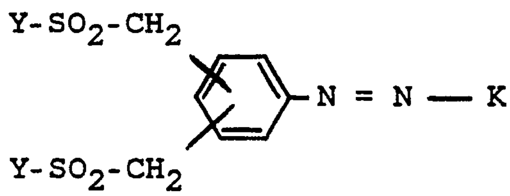

(10a)

entsprechen, in welcher Y eine der obengenannten Bedeutungen hat und bevorzugt die ß-Sulfatoethyl-Gruppe ist und K für den 2-Acetylamino-5-sulfo-4-amino-phenyl-Rest oder für einen Rest der allgemeinen Formel (11a), (11b), (11c), (11d), (11e), (11f) oder (11g)

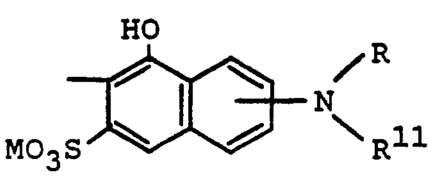

(11a)

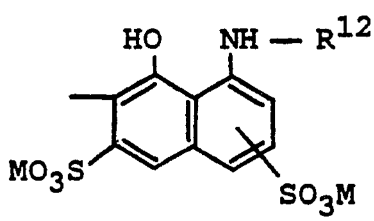

(11b)

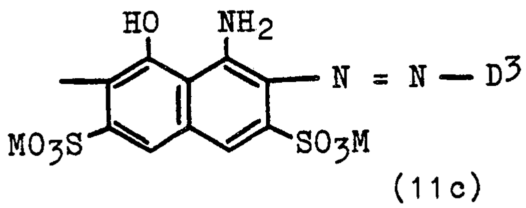

(11c)

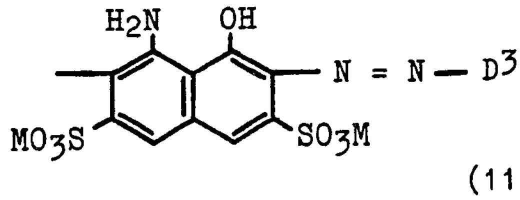

(11d)

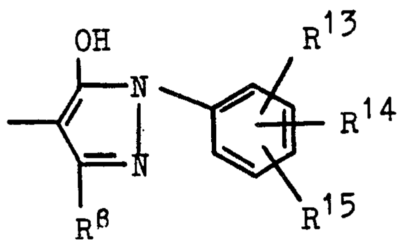

(11e)

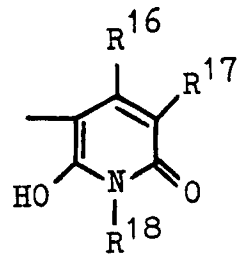

(11f)

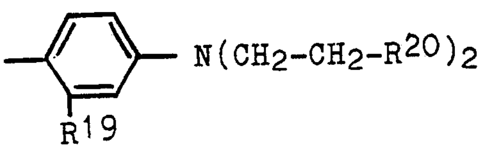

(11g)

steht, in welchen bedeuten:

M hat eine der obengenannten Bedeutungen;

R ist ein Wasserstoffatom oder die Methylgruppe;

$R^{11}$ ist ein Wasserstoffatom oder eine Alkylgruppe von 1 bis 4 C-Atomen, wie die Methyl- oder Ethylgruppe, oder eine Alkanoylgruppe von 2 bis 4 C-Atomen, wie die Acetylgruppe, oder die ß-Sulfatoethylsulfonyl- oder 3- (ß-Chlorethylsulfonyl)-benzoyl-Gruppe;

$R^{12}$ ist ein Wasserstoffatom oder eine Alkanoylgruppe von 2 bis 4 C-Atomen, wie die Acetyl- oder Propionylgruppe, oder die Benzoyl- oder 3-(ß-Chlorethylsulfonyl)-benzoyl-Gruppe, hiervon bevorzugt die Benzoylgruppe;

$D^3$ ist eine Gruppe entsprechend der obengenannten und definierten allgemeinen Formeln (6a) und (6b), wobei $R^2$ bevorzugt Wasserstoff, Chlor, Brom, Methyl, Methoxy, Carboxy oder Sulfo ist und $R^3$ bevorzugt Wasserstoff, Methyl, Methoxy, Chlor und Sulfo ist;

$R^{\beta}$ ist die Methylgruppe oder die Carboxygruppe;

$R^{13}$ ist ein Wasserstoffatom oder ein Brom- oder Chloratom oder die Methyl-, Methoxy-, Carboxy- oder Sulfogruppe;

$R^{14}$ ist ein Wasserstoffatom, ein Chloratom, die Methyl-, Methoxy- oder Sulfogruppe;

R15 ist ein Wasserstoffatom oder die Sulfogruppe;

$R^{16}$ ist ein Wasserstoffatom oder eine Alkylgruppe von 1 bis 4 C-Atomen, wie die Methylgruppe, oder der Phenylrest;

$R^{17}$ ist ein Wasserstoffatom oder die Cyano-, Carbamoyl-oder Sulfomethylgruppe;

$R^{18}$ ist ein Wasserstoffatom oder eine Alkylgruppe von 1 bis 4 C-Atomen, wie die Methyl- oder Ethylgruppe, die durch eine Sulfogruppe substituiert sein kann, oder ist ein Phenylrest, der durch eine oder zwei Sulfogruppen substituiert sein kann;

$R^{19}$ ist ein Wasserstoffatom oder ein Chloratom;

$R^{20}$ ist die Hydroxy-, Sulfato- oder Sulfogruppe.

Weiterhin sind erfindungsgemäße Azoverbindungen hervorzuheben, die der allgemeinen Formel (10b)

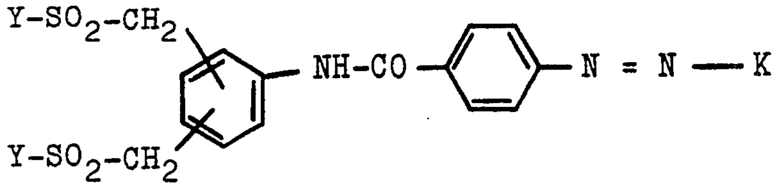

(10b)

in welcher K für einen Rest der obengenannten und definierten allgemeinen Formel (11b) oder (11e) steht.

Bevorzugte erfindungsgemäße Schwermetallkomplex-Verbindungen, insbesondere 1:1-Kupferkomplex-Verbindungen, sind solche der Azoverbindungen der allgemeinen Formel (10a) mit dem Kupplungsrest der Formel (11a), (11b), (11c), (11d), (11e) oder (11f) sowie solche der Azoverbindungen der allgemeinen Formel (10b) mit einem Kupplungsrest der Formel (11b) oder (11e).

Weitere technisch interessante erfindungsgemäße Azoverbindungen sind solche, die der allgemeinen Formel (12a)

$D^4 - N = N - K^o$ (12a)

entsprechen, in welcher

$D^4$ ein Rest der allgemeinen Formel (4C)

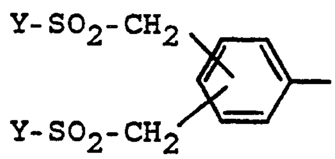

(4C)

mit Y der obengenannten, insbesondere bevorzugten Bedeutung, ist und $K^o$ für den 4-[N-Ethyl-N-(3′-sulfobenzyl)]-amino-phenyl- oder den 7-Sulfo-5-acetylamino-methyl-2-amino-naphth-1-yl- oder den 5,7-Disulfo-2-amino-naphth-1-yl- oder den 6-oder 7-Sulfo-4-acetylamino-naphth-1-yl- oder den 2-Hydroxy-5-methylphenyl- oder den 4-Sulfo- oder 5-Sulfo-1-hydroxy-naphth-2-yl- oder den 3,6-Disulfo- oder 4,7-Disulfo-1-hydroxy-naphth-2-yl- oder den 3,6-Disulfo-2-amino-1-naphth-yl- oder den 4-(6′- oder 7′-Sulfo-4′-acetylamino-naphth-1′-yl)-azo-6- oder -7-sulfo-naphth-1-yl- oder den 6-Sulfo-8-hydroxy-2-amino- oder -2-acetylamino-naphth-1-yl- oder den 6-(2′,5′-Disulfo-phenyl)-azo-7-sulfo-5-hydroxy-2-amino-naphth-1-yl- oder den 3-Sulfo-7-(4′-sulfophenylamino)-2-hydroxy-naphth-1-yl- oder den 4- oder 5-Sulfo-8-hydroxy-2-amino-naphth-1-yl- oder den N-Ethyl-4-methyl-5-cyano- oder -5-carbamoyl- oder -5-sulfomethyl-2-hydroxy-6-oxo-pyrid-3-yl-Rest steht.

Von weiterem technischen Interesse sind erfindungsgemäße Verbindungen entsprechend der nachstehenden allgemeinen Formeln (12b) bis (12h) sowie die Kupferkomplex-Verbindungen entsprechend den allgemeinen Formeln (12i) und (12k):

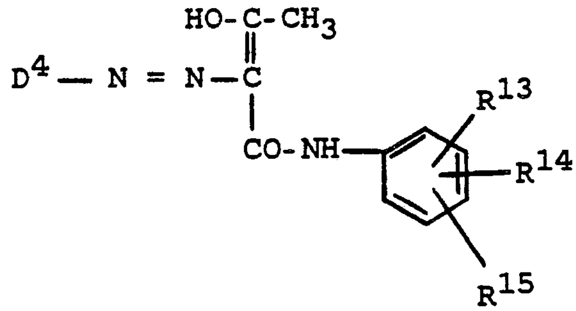

(12b)

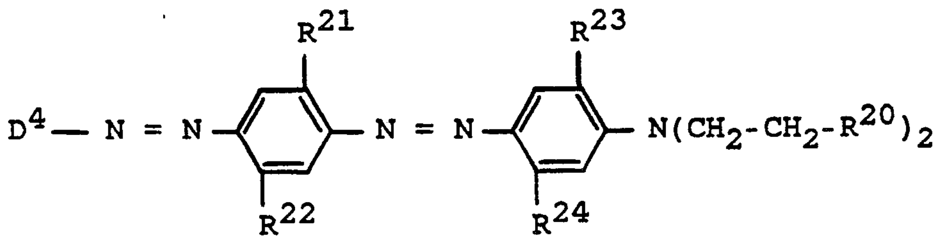

(12c)

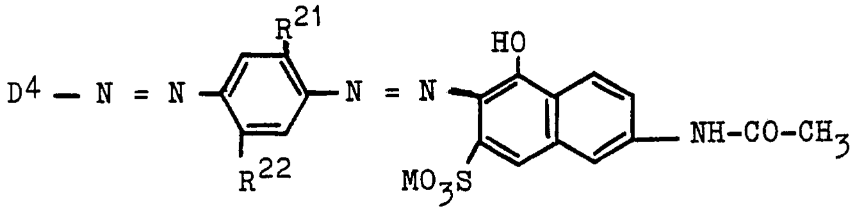

(12d)

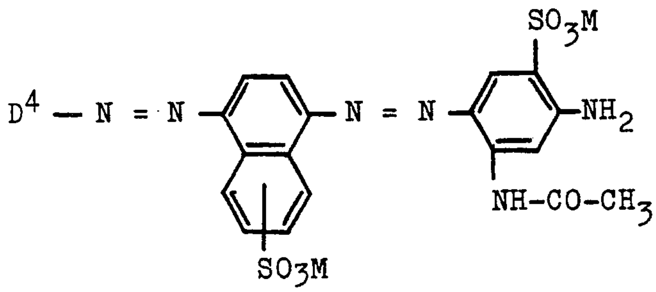

(12e)

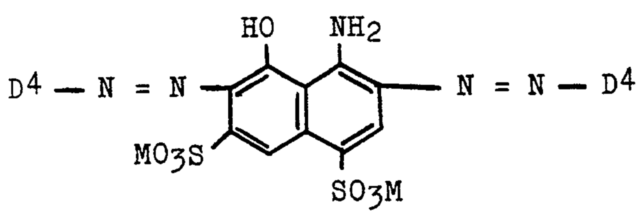

(12f)

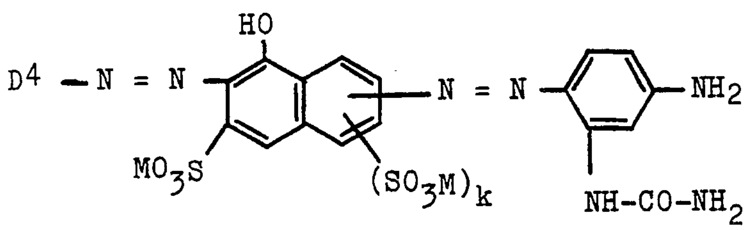

(12g)

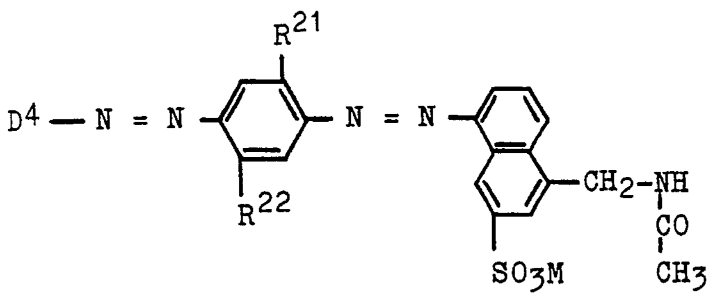

(12h)

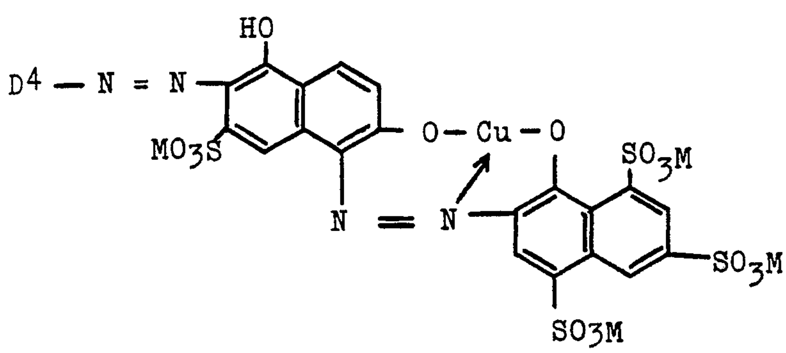

(12i)

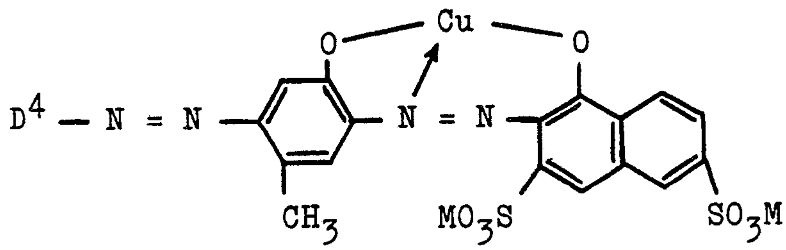

(12k)

In diesen Formel bedeuten:

$D^4$, M, $R^{13}$, $R^{14}$, $R^{15}$ und $R^{20}$ haben die obengenannten Bedeutungen;

$R^{21}$ ist ein Wasserstoffatom oder eine Alkylgruppe von 1 bis 4 C-Atomen, wie die Methylgruppe, oder eine Alkoxygrupppe von 1 bis 4 C-Atomen, wie die Methoxy- oder Ethoxygruppe, oder ein Halogenatom, wie Chlor oder Brom;

$R^{22}$ ist ein Wasserstoffatom oder eine Alkylgruppe von 1 bis 4 C-Atomen, wie die Methylgruppe, oder die Acetylamino-oder Ureidogruppe;

$R^{23}$ ist ein Wasserstoffatom oder eine Alkylgruppe von 1 bis 4 C-Atomen, wie die Methylgruppe, oder eine Alkoxygrupppe von 1 bis 4 C-Atomen, wie die Methoxy- oder Ethoxygruppe, oder ein Halogenatom, wie Chlor oder Brom;

$R^{24}$ ist ein Wasserstoffatom oder eine Alkylgruppe von 1 bis 4 C-Atomen, wie die Methylgruppe, oder die Acetylamino-oder Ureidogruppe;

k ist die Zahl Null oder 1 (wobei im Falle von k gleich Null diese Gruppe ein Wasserstoffatom bedeutet).

Die erfindungsgemäßen Verbindungen können sowohl in saurer Form als auch in Form ihrer Salze vorliegen. Sie finden, bevorzugt in Form der Alkalimetallsalze Verwendung zum Färben (einschließlich des Bedruckens) von hydroxygruppen-und/oder carbonamidgruppen-haltigen Materialien, insbesondere Fasermaterialien.

Die vorliegende Erfindung betrifft weiterhin Verfahren zur Herstellung der erfindungsgemäßen Verbindungen entsprechend der allgemeinen Formel (1) und deren Schwermetallkomplexe. Sie können beispielsweise erfindungsgemäß hergestellt werden, indem man das Diazoniumsalz einer Aminoverbindung der allgemeinen Formel (13)

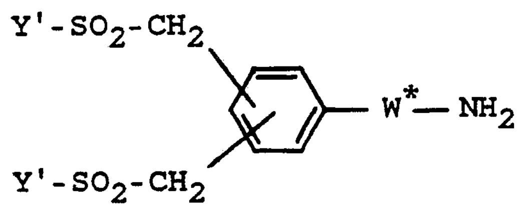

(13)

in welcher W* die obengenannte Bedeutung besitzt und Y′ eine der Bedeutungen von Y hat oder die ß-Hydroxyethyl-Gruppe ist, mit einer Kupplungskomponente der allgemeinen Formel (14)

$H\{A - N = N\}_v - K$ (14)

in welcher A, v und K die obengenannten Bedeutungen haben, kuppelt und im Falle, daß Y′ für die ß-Hydroxyethyl-Gruppe steht, die erhaltene Azoverbindung in eine Verbindung der Formel (1) mit der Bedeutung von Y gemäß einer der später angegebenen Verfahrensweisen überführt und gegebenenfalls eine weitere Umwandlungsreaktion anschließt, oder indem man statt einer Kupplungskomponente der Formel (14) ein kupplungsfähiges Vorprodukt der erfindungsgemäßen Azoverbindung der Formel (1) verwendet und die erhaltene Azoverbindung durch eine weitere Kupplung bzw. weitere Kupplungen oder sonstige Umwandlungsreaktionen in die erfindungsgemaße Azoverbindung der Formel (1) überführt. Liegen in den synthetisierten Azoverbindungen der Formel (1) zur Metallkomplexbildung befähigte Gruppen vor, so können die Azoverbindungen der Formel (1) auch nachträglich metallisiert werden. Die wichtigsten Verfahrensvarianten sind in den Ausführungsbeispielen dargestellt.

So kann man erfindungsgemäß außer der Umsetzung des Diazoniumsalzes der Aminoverbindung der Formel (13) mit einer Kupplungskomponente der allgemeinen Formel (14), in welcher A insbesondere die Bedeutung einer bivalenten, doppelankuppelbaren Kupplungskomponente besitzt, Verbindungen der allgemeinen Formel (1), in welcher die Formelreste a und b beide für die Zahl 1 stehen und A im Falle von v gleich 1 den bivalenten Rest einer kupplungsfähigen und diazotierbaren Mittelkomponente bedeutet, in der Weise herstellen, daß man die Diazoniumverbindung einer Aminoazoverbindung entsprechend der allgemeinen Formel (15)

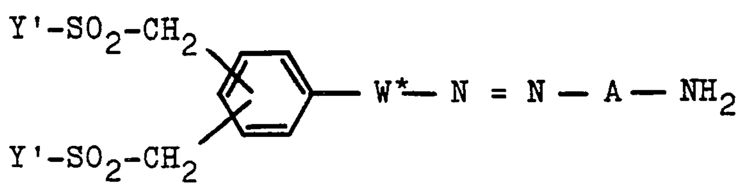

(15)

in welcher Y′, W* und A die obengenannten Bedeutungen haben, mit einer Kupplungskomponente der allgemeinen Formel H-K mit K der obengenannten Bedeutung kuppelt und gegebenenfalls die ß-Hydroxyethyl-Gruppe(n) im Falle von Y′ gleich einer ß-Hydroxyethyl-Gruppe in eine Gruppe Y obiger Bedeutung überführt. Die Aminoazo-Ausgangsverbindung der Formel (15) läßt sich in üblicher Weise durch Kupplungsreaktion des Diazoniumsalzes des Amins (13) mit einer Kupplungskomponente der Formel H-A-$NH_2$ mit A der genannten Bedeutung herstellen.

Ist die Kupplungskomponente eine bivalente, doppelankuppelbare Verbindung, enthält sie beispielsweise eine kupplungsfähige Aminogruppe und gleichzeitig eine kupplungsfähige Hydroxygruppe, so kann zur Herstellung einer Disazoverbindung die Kupplung zunächst mit dem ersten Mol der Diazoniumverbindung des Amins im sauren pH-Bereich zur Monoazoverbindung erfolgen und die zweite Kupplungsreaktion mit dem zweiten Mol der Diazoniumverbindung des Amins anschließend im schwach sauren bis schwach alkalischen Bereich. Solche Disazoverbindungen sind beispielsweise die der allgemeinen Formel (3b) und insbesondere Disazoverbindungen der allgemeinen Formel (16)

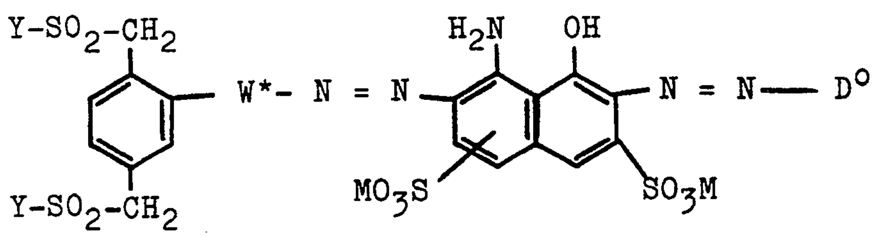

(16)

in welcher Y, W* und M die obengenannten Bedeutungen haben und D° einen Benzolrest oder einen Naphthalinrest bedeutet, die beide durch in der Azochemie übliche Substituenten, wie beispielsweise Substituenten aus der Gruppe Hydroxy, Alkyl von 1 bis 4 C-Atomen, Alkoxy von 1 bis 4 C-Atomen, Alkanoylamino mit 2 bis 4 C-Atomen, gegebenenfalls substituiertes Benzoylamino, Halogen, Nitro, Carboxy und Sulfo und/oder durch eine oder zwei faserreaktive Gruppen, wie beispielsweise aus der heterocyclischen Reihe oder Gruppen der Formel -$SO_2$-Y mit Y einer der obengenannten Bedeutungen, substituiert sein können. Bevorzugte Verbindungen dieser Art sind solche entsprechend der allgemeinen Formel (16a)

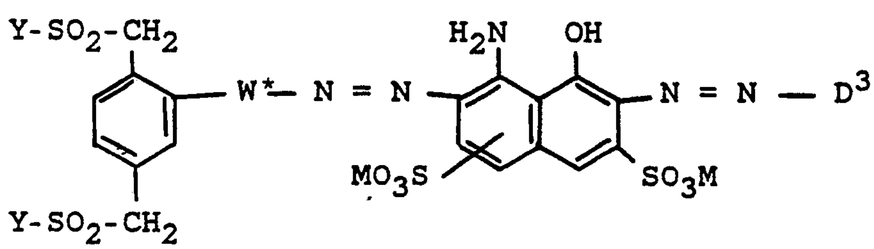

(16a)

in welcher Y, W* und M die obengenannten, insbesondere bevorzugten Bedeutungen haben und $D^3$ eine der oben bei Formel (11d) angegebenen Bedeutungen besitzt. Bevorzugt ist in Formel (16a) W* eine direkte kovalente Bindung, und bevorzugt steht die eine Sulfogruppe $MO_3S$- in der Aminonaphthol-Kupplungskomponente in meta-Stellung zur Aminogruppe.

So können die Disazoverbindungen der allgemeinen Formel (16) bzw. (16a) hergestellt werden, indem man eine Monoazoverbindung entsprechend der allgemeinen Formel (17)

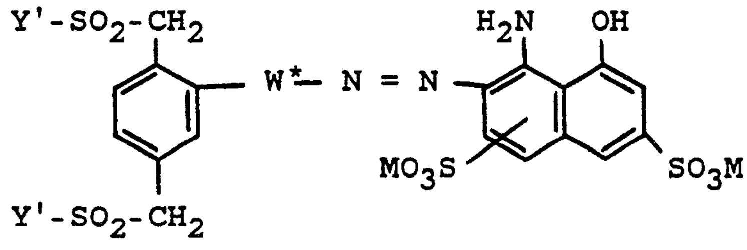

(17)

in welcher Y′, W* und M die obengenannten Bedeutungen haben, mit dem Diazoniumsalz einer Aminoverbindung der allgemeinen Formel $D^o$-$NH_2$ bzw. $D^3$-$NH_2$ mit $D^o$ bzw. $D^3$ der obengenannten Bedeutung kuppelt, wobei $D^o$ bzw. $D^3$ auch eine ß-Hydroxyethylsulfonyl-Gruppe entsprechend einer Gruppe der allgemeinen Formel -$SO_2$-Y′ besitzen kann. Im Falle der Verwendung von Ausgangsverbindungen mit Y′ gleich einer ß-Hydroxyethyl-Gruppe kann diese Gruppe in der synthetisierten Disazoverbindung in eine Gruppe Y der erfindungsgemäßen Disazoverbindung, wie später noch angegeben, übergeführt werden.

Die Diazotierungs- und Kupplungsreaktionen erfolgen in üblicher und altbekannter Weise, so die Diazotierung in der Regel bei einer Temperatur zwischen -5° C und +15° C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 30° C in bevorzugt wäßrigem Medium.

Ist die Kupplungskomponente eine bivalente, doppelankuppelbare Verbindung, wie beispielsweise die 1-Amino-8-naphthol-3,6- oder -4,6-disulfonsäure, so erfolgen die beiden Kupplungsreaktionen, wie früher bereits angegeben, zunächst mit dem ersten Mol der Diazoniumverbindung eines der Amine im stark sauren Medium und sodann die zweite Kupplungsreaktion zwischen der gebildeten Monoazoverbindung und dem zweiten Mol einer Diazoniumverbindung eines aromatischen Amins im schwach sauren, neutralen oder schwach alkalischen Bereich. So können die erfindungsgemäßen Disazoverbindungen der allgemeinen Formeln (16) und (16a) neben der bereits angegebenen Kupplungsreaktion zwischen der Verbindung (17) und dem Diazoniumsalz des Amins $D^o$-$NH_2$ bzw. $D^3$-$NH_2$ , die im schwach sauren bis schwach alkalischen Bereich erfolgt, wie beispielsweise bei einem pH-Wert zwischen 4 und 7,5, erfindungsgemäß synthetisiert werden, indem man zunächst das Diazoniumsalz der Aminoverbindung der allgemeinen Formel (15) mit 1-Amino-8-naphthol-3,6- oder -4,6-disulfonsäure bei einem pH-Wert zwischen 0 und 2,5 kuppelt und die so hergestellte Monoazoverbindung entsprechend der allgemeinen Formel (17) mit der Diazoniumverbindung des Amins der allgemeinen Formel $D^o$-$NH_2$ bzw. $D^3$-$NH_2$ bei einem pH-Wert zwischen 4 und 7,5 zur erfindungsgemäßen Disazoverbindung umsetzt.

Disazoverbindungen entsprechend der allgemeinen Formel (1) bzw. (3a) bzw. (5b), in welchen A bzw. E bzw. $E^1$ den bivalenten Rest einer kupplungsfähigen und diazotierbaren Mittelkomponente darstellen, lassen sich auch erfindungsgemäß in der Weise herstellen, daß man zunächst die Diazoniumverbindung des Amins der allgemeinen Formel (13) mit der aminogruppenhaltigen und somit diazotierbaren Kupplungskomponente entsprechend der allgemeinen Formel H-A-$NH_2$ bzw. H-E-$NH_2$ bzw. H-$E^1$-$NH_2$ mit A, E und $E^1$ der obengenannten Bedeutung kuppelt und in der so gebildeten Amino-Azoverbindung die Aminogruppe diazotiert und mit einer Kupplungskomponente H-K mit K der obengenannten Bedeutung zur erfindungsgemäßen Disazoverbindung kuppelt.

Alle diese Umsetzungsmöglichkeiten zur Synthese von Disazoverbindungen sind analog den in der Literatur bekannten oder dem Fachmann geläufigen Methoden zur Synthese von Disazoverbindungen.

Bei der erfindungsgemäßen Synthese von erfindungsgemäßen Schwermetallkomplex-Azoverbindungen, wie beispielsweise solchen entsprechend der allgemeinen Formel (5c) und (5d), geht man in der Regel von solchen schwermetallfreien erfindungsgemäßen Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung eine oxidierbares Wasserstoffatom oder eine Hydroxygruppe oder eine niedere Alkoxygruppe, wie Methoxygruppe, gebunden enthält. Diese schwermetallfreien Azoverbindungen werden analog bekannten und üblichen Verfahrensweisen mit einem ein Schwermetallion abgebenden Mittel, wie einem Schwermetallsalz, umgesetzt, sofern sie nicht nur in der Kupplungskomponente, sondern auch in der Diazokomponente die erwähnte Hydroxygruppe enthalten. Sofern die Diazokomponente in ortho-Stellung zur Azogruppe ein Wasserstoffatom oder eine Alkoxygruppe

besitzt, können diese Ausgangs-Azoverbindungen im Falle der Bildung eines erfindungsgemäßen Kupferkomplexes mittels einer üblichen oxidativen oder entalkylierenden Kupferreaktion in die erfindungsgemäße Kupferkomplex-Azoverbindung übergeführt werden. Alle diese Verfahrensweisen sind in der Literatur zahlreich beschrieben.

Kupplungs- und diazotierbare Verbindungen, die als Mittelkomponenten den allgemeinen Formeln H-A-H bzw. H-E-H bzw. H-$E^1$-H entsprechen und die zum Aufbau der erfindungsgemäßen Azoverbindungen der Formel (1) verwendet werden können, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6- oder -7-sulfonsäure, 2-Sulfo-5-acetylamino-anilin, 2-Amino-5-naphthol-7-sulfonsäure, 2-Amino-8-naphthol-6-sulfonsäure, 2-(4′-Amino-benzoyl)-amino-5-naphthol-7-sulfonsäure, 1-(4′-Amino-2′-sulfo-phenyl)-3-methyl- oder -3-carboxy-5-pyrazolon und Acetoacetyl-(3′-sulfo-4′-amino)-anilid.

Von den anfangs genannten zweifach ankuppelbaren Kupplungskomponenten, die als Mittelkomponenten H-A-H bzw. H-G-H dienen können, sind die 1-Amino-8-naphthol-4,6-disulfonsäure und insbesondere die 1-Amino-8-naphthol-3,6-disulfonsäure bevorzugt.

Kupplungskomponenten entsprechend der allgemeinen Formel H-K sind beispielsweise Phenol, 1-Hydroxy-3- oder -4-methylbenzol, 1-Hydroxy-benzol-4-sulfonsäure, 1-Hydroxy-naphthalin, 2-Hydroxy-naphthalin, 2-Hydroxy-naphthalin-6- oder -7-sulfonsäure, 2-Hydroxy-naphthalin-3,6- oder -6,8-disulfonsäure, 1-Hydroxy-naphthalin-4-sulfonsäure, 1-Hydroxy-naphthalin-4,6-oder -4,7-disulfonsäure, 3-Methyl-anilin, 2-Methoxy-5-methyl-anilin, 2,5-Dimethyl-anilin, 3-Ureido-anilin, 3-Acetylamino-anilin, 3-Hydroxyacetylaminoanilin, 1,3-Diaminobenzol-4-sulfonsäure, 1-Aminonaphthalin-6- oder -8-sulfonsäure, 1-Amino-2-methoxy-naphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-amino-naphthalin-5,7-disulfonsäure, 1-Amino-8-hydroxynaphthalin-2,4,6-trisulfonsäure, 1-Hydroxy-8-acetylamino-naphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- und 2-Ethylamino-5-hydroxynaphthalin-7-sulfonsäure, 2-(N-Acetyl-N-methyl)-amino-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methylamino- und 2-Ethylamino-8-hydroxynaphthalin-6-sulfonsäure, 2-(N-Acetyl-N-methyl)-amino-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- und -4,6-disulfonsäure, 1-Acetylamino-8-hydroxynaphthalin-3,6- und -4,6-disulfonsäure, 1-(4′-Aminobenzoylamino)-8-hydroxynaphthalin-3,6- und -4,6-disulfonsäure, 1-(4′-Nitrobenzoylamino)-8-hydroxynaphthalin-3,6- und -4,6-disulfonsäure, 1-(3′-Aminobenzoylamino)-8- hydroxynaphthalin-3,6- und -4,6-disulfonsäure, 1-(3′-Nitrobenzoylamino)-8-hydroxynaphthalin-3,6- und -4,6-disulfonsäure, 2-(4′-Amino-3′-sulfo-phenylamino)-5-hydroxynaphthalin-7-sulfonsäure, 3-Methyl-5-pyrazolon, 1-Phenyl-3-methyl-5-pyrazolon, 1-(4′-Sulfophenyl)-3-methyl-5-pyrazolon, 1-(4′-Sulfophenyl)-5-pyrazolon-3-carbonsäure, 1-(3′-Aminophenyl)-3-methyl-5-pyrazolon, 1-(2′,5′-Disulfophenyl)-3-methyl-5-pyrazolon, 1-(2′-Methyl-4′-sulfophenyl)-5-pyrazolon-3-carbonsäure, 1-(4′,8′-Disulfonaphthyl-[2′])-3-methyl-5-pyrazolon, 1-(5′-7′-Disulfonaphthyl-[2′])-3-methyl-5-pyrazolon, 1-(2′,5′-Dichlor-4′-sulfophenyl)-3-methyl-5-pyrazolon, 3-Carbamoyl-4-methyl-6-hydroxy-2-pyridon, 1-Ethyl-3-cyano- oder -3-chlor-4-methyl-6-hydroxy-2-pyridon, 1-Ethyl-3-sulfomethyl-4-methyl-6-hydroxy-2-pyridon, 2,4,6-Triamino-3-cyano-pyridin, 2-(3′-Sulfophenylamino)-4,6-diamino-3-cyano-pyridin, 2-(2′-Hydroxyethylamino)-3-cyano-4-methyl-6-amino-pyridin, 2,6-Bis-(2′-hydroxyethylamino)-3-cyano-4-methylpyridin, 1-Ethyl-3-carbamoyl-4-methyl-6-hydroxy-2-pyridon, 1-Ethyl-3-sulfomethyl-4-methyl-5-carbamoyl-6-hydroxy-2-pyridon, Acetoacetylamino-benzol, 1-(N-Acetoacetyl)-amino-2-methoxy-benzol-5-sulfonsäure, 4-Hydroxy-2-chinolon, 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2-(2′,5′-disulfophenylazo)-naphthalin-3,6-disulfonsäure, 1-(ß-Aminoethyl)-3-cyano-4-methyl-6-hydroxy-2-pyridon, 1-(γ-Aminopropyl)-3-sulfomethyl-4-methyl-6-hydroxy-2-pyridon, 1,3-Diaminobenzol, 3-[N,N-Di-(ß-hydroxyethyl)]-amino-anilin, 3-[N,N-Di-(ß-sulfatoethyl)]-amino-anilin, 3-[N,N-Di-(ß-hydroxyethyl)]-amino-4-methoxy-anilin, 3-[N,N-Di-(ß-sulfatoethyl)]-amino-4-methoxy-anilin, 3-Sulfo-benzylamino-benzol, 3-Sulfo-4-chlor-benzylamino-benzol, 3-[N,N-Di-(sulfobenzyl)]-amino-anilin, N,N-Di-(ß-sulfoethyl)-anilin, 3-Chlor-N,N-di-(ß-sulfatoethyl)-anilin und N-Ethyl-N-(3′-sulfobenzyl)-anilin.

Beispiele für Diazokomponenten, die zum Aufbau der erfindungsgemäßen Azoverbindungen dienen und die der allgemeinen Formel (13) entsprechen, sind beispielsweise 2,5-Di-(VS-methyl)-anilin, 3,4-Di-(VS-methyl)-anilin, 2,4-Di-(VS-methyl)-anilin, 3- oder 4-N-[2′,5′-Di-(VS-methyl)-phenyl]-amidocarbonyl-anilin, 3-oder 4-N-[2′,4′-Di-(VS-methyl)-phenyl]-amidocarbonyl-anilin und 3- oder 4-N-[3′,4′-Di-(VS-methyl)-phenyl]-amidocarbonyl-anilin, wobei hier VS eine Gruppe der allgemeinen Formel $-SO_2-Y'$ mit Y′ der obengenannten Bedeutung darstellt, wobei Y′ bevorzugt die ß-Hydroxyethyl-Gruppe oder die ß-Sulfatoethyl- oder Vinylgruppe bedeutet.

Sowohl die Verbindungen entsprechend der allgemeinen Formel (1) als auch die der allgemeinen Formel (13), in welchen Y bzw. Y′ die ß-Hydroxyethyl-Gruppe bedeuten, können in üblicher und bekannter Verfahrensweise in Verbindungen übergeführt werden, in welchen Y bzw. Y′ eine andere Bedeutung als die ß-Hydroxyethyl-Gruppe besitzt, so beispielsweise in deren Esterderivate, wie beispielsweise von mehrwertigen anorganischen Säuren oder von aliphatischen und aromatischen Carbon- oder Sulfonsäuren, so beispielsweise in Verbindungen, in welchen Y bzw. Y′ für die ß-Chlorethyl-, ß-Sulfatoethyl-, ß-Phosphatoethyl-, ß-Thiosulfatoethyl-, ß-Acetyloxyethyl- oder ß-Toluylsulfonyloxyethyl-Gruppe steht. Hierfür geeignete Veresterungs- und Acylierungsmittel sind beispielsweise die entsprechenden anorganischen oder organischen Säuren oder deren Anhydride oder Halogenide oder Amide, wie beispielsweise Schwefelsäure, Schwefeltrioxid enthaltende Schwefelsäure, Chlorsulfonsäure, Amidosulfonsäure, Phosphorsäure, Polyphosphorsäure, Phosphoroxychlorid, Gemische aus Phosphorsäure und Phosphorpentoxid, Acetanhydrid, Toluolsulfochlorid und Thionylchlorid.

Diejenigen Verbindungen, in welchen Y bzw. Y′ für die Vinylgruppe steht, können aus deren analogen Esterderivaten mittels Alkali, so in wäßrigem Medium bei einem pH-Wert von 10 bis 12 und einer Temperatur zwischen 40 und 50 °C während 10 bis 20 Minuten, hergestellt werden. Die Synthese von beispielsweise ß-(Dialkylamino)-ethylsulfonyl- und ß-Thiosulfatoethylsulfonyl-Derivaten der Verbindungen (1) und (13) erfolgt durch Umsetzung von deren Vinylsulfonyl-Verbindungen mit dem entsprechenden Dialkylamin oder mit einem Alkalisalz der Thioschwefelsäure, wie Natriumthiosulfat. Alle diese Verfahrensweisen der Überführung von einer Gruppe $-SO_2-Y'$ bzw. $-SO_2-Y$ in eine andere sind dem Fachmann auf diesem faserreaktiven Gebiet geläufig und zahlreich in der Literatur beschrieben.

Die Aminoverbindungen der allgemeinen Formel (13), in welchen W* für die direkte kovalente Bindung steht, können hergestellt werden, indem man von einem 1,2-Di-(halogenomethyl)-benzol oder den entsprechenden 1,3- oder 1,4-Isomeren ausgeht, wobei das Halogen bevorzugt ein Chloratom ist, und das Di-(halogenomethyl)-benzol mit Mercaptoethanol im wäßrigen Medium bei einem pH-Wert zwischen 8 und 12, bevorzugt zwischen 10,5 und 11,5, und bei einer Temperaturen zwischen 30 und 120 °C, vorzugsweise zwischen 70 und 100 °C, zu den entsprechenden Di-thioether-Verbindungen umsetzt. Anschließend wird die erhaltene Thioetherverbindung analog bekannten Verfahrensweisen zu der entsprechenden Sulfonylverbindung oxidiert. Die Oxidation kann nach verschiedenen Methoden erfolgen, beispielsweise in wäßrigem, saurem Medium, bevorzugt bei einem pH-Wert von unterhalb 5, mittels Wasserstoffperoxid in Gegenwart oder Abwesenheit von Wolfram- oder Vanadinverbindungen als Katalysatoren, ferner mittels Peressigsäure, Kaliumpermanganat oder Chromsäure, jeweils bei einer Temperatur zwischen 50 und 120 °C, vorzugsweise zwischen 80 und 100 °C, oder mittels einer Lösung von elementarem Chlor in wäßriger Salzsäure gemäß den Angaben der Deutschen Patentschrift Nr. 887 505; bei der Anwendung von Chlor/Salzsäure erhält man die entsprechenden ß-Chlorethylsulfonyl-Verbindungen der allgemeinen Formel (13).

Die erhaltenen Di-(ß-chlorethylsulfonyl-methyl)- bzw. Di-(ß-hydroxyethylsulfonyl-methyl)-benzolverbindungen werden anschließend in üblicher Weise nitriert, beispielsweise in einem Gemisch aus Salpetersäure und konzentrierter Schwefelsäure bei einer Temperatur zwischen 30 und 100 °C.

Hierbei gehen die Hydroxygruppen in die Schwefelsäureestergruppen über, die anschließend wiederum bei erhöhter Temperatur in wäßrig-mineralsaurer Lösung hydrolysiert werden. Die erhaltenen Nitroverbindungen werden sodann nach üblichen Verfahrensweisen zu den Anilinverbindungen reduziert. Die Reduktion kann mittels Wasserstoff an einen metallischen Katalysator, wie einem Palladium-, Platin- oder Raney-Nickel-Katalysator, unter Druck im Autoklaven, beispielsweise bei einem Wasserstoffdruck von 25 bis 35 bar und einer Temperatur zwischen 40 und 80 °C, oder mittels der Reduktion nach Béchamp bei Verwendung von Eisenspänen erfolgen. Die ß-Hydroxyethylsulfonyl-Gruppen können dann gemäß den obigen Angaben in faserreaktive Gruppen entsprechend der Formel $-SO_2-Y$ mit Y einer der obigen Bedeutungen übergeführt werden.

Die Ausgangsverbindungen der allgemeinen Formel (13), in welchen W* für eine Gruppe der allgemeinen Formel (2) steht, sind in der Weise herstellbar, indem man eine Verbindung der allgemeinen Formel (13), in welcher Y′ ß-Hydroxyethyl-Gruppen bedeuten und W* die direkte kovalente Bindung ist, mit 3- oder 4-Nitro-benzoylchlorid in wäßriger Natriumbicarbonatlösung bei einer Temperatur zwischen 20 und und 70 °C umsetzt und anschließend die Nitrogruppe, beispielsweise gemäß den obigen Angaben, reduziert.

Die erfindungsgemäßen Verbindungen der allgemeinen Formel (1) und deren Schwermetallkomplex-Verbindungen - im nachfolgenden allgemein als Verbindungen (1) bezeichnet - haben faserreaktive Eigenschaften und besitzen sehr wertvolle Farbstoffeigenschaften. Sie können deshalb zum Färben

(einschließlich Bedrucken) von hydroxygruppenhaltigen und/oder carbonamidgruppenhaltigen Materialien verwendet werden. Hierzu können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Die Abscheidung und Isolierung der Verbindungen (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen oder Sprühtrocknung der Reaktionslösung. Falls die letztgenannte Art der Isolierung gewählt wird, empfiehlt es sich zuweilen, vor dem Eindampfen eventuell in den Lösungen vorhandene Sulfatmengen durch Fällung als Calciumsulfat zu entfernen.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermateialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten, insbesondere auf den genannten Fasermaterialien, nach den für wasserlösliche, faserreaktive Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem durch Hitzeeinwirkung und/oder durch Einwirkung eines alkalisch wirkenden Mittels fixiert. Solche Färbe- und Fixierweisen sind in der Literatur zahlreich beschrieben (s. bspw. europäische Patentanmeldungs-Veröffentlichung Nr. 0 181 585 A2). Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels, gründlich gespült. Die Verbindungen (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein ist.

Die erfindungsgemäßen Färbungen besitzen, insbesondere auf Cellulosefasermaterialien, gute Lichtechtheiten sowohl im trockenen Zustand der Färbung als auch im nassen, beispielsweise mit einer Schweißlösung befeuchteten, Zustand sowie gute Naßechtheiten, wie beispielsweise gute Waschechtheiten bei 60 bis 95°C, auch in Gegenwart von Perboraten, saure und alkalische Walk-, Überfärbe- und Schweißechtheiten, gute saure und alkalische Schweißechtheiten, eine hohe Dampfbeständigkeit, gute Alkali-, Säure-, Wasser-und Seewasserechtheiten, desweiteren eine gute Plissierechtheit, Bügelechtheit und Reibechtheit. Ebenso besitzen sie eine gute Säurelagerbeständigkeit ("acid fading") beim Lagern von feuchten, noch Essigsäure enthaltendem, gefärbtem Material.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

Eine Mischung mit einem pH-Wert von 5 bis 5,5 und einer Temperatur von 0 bis 5° C aus 450 Teilen einer wäßrigen Lösung von 49,7 Teilen 2,5-Di-[(ß-sulfatoethylsulfonyl)-methyl]-anilin und 20 Volumenteilen einer wäßrigen 5n-Natriumnitritlösung wird langsam in ein Gemisch aus 30 Volumenteilen konzentrierter Salzsäure und 300 Teilen Eis eingerührt. Man rührt noch eine Stunde bei 0 bis 5° C nach und zerstört überschüssige salpetrige Säure mit Amidosulfonsäure.

In diese Diazoniumsalzsuspension gibt man 42,3 Teile 1-Benzoylamino-8-naphthol-3,6-disulfonsäure und führt die Kupplungsreaktion bei einem pH-Wert von 5 und einer Temperatur zwischen 15 und 20° C während mehrerer Stunden durch. Anschließend klärt man die Syntheselösung bei 50° C mittels Kieselgur und Filtration und isoliert die erhaltene erfindungsgemäße Azoverbindung als Alkalimetallsalz durch Eindampfen des Filtrates unter reduziertem Druck.

Die erfindungsgemäße Azoverbindung besitzt, in Form der freien Säure geschrieben, die Formel

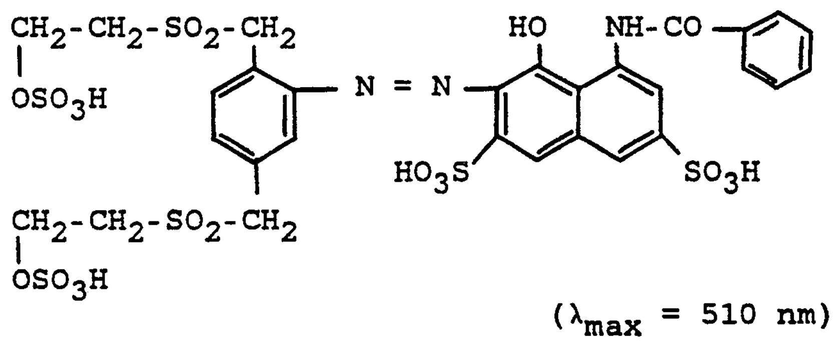

($\lambda_{max}$ = 510 nm),

zeigt sehr gute faserreaktive Farbstoffeigenschaften und färbt die in der Beschreibung genannten Materialien, insbesondere Cellulosefasermaterialien, wie Baumwolle, nach den in der Technik für faserreaktive Farbstoffe üblichen Applikations- und Fixierverfahren in kräftigen, roten, gut ätzbaren Tönen mit guten Echtheitseigenschaften, von denen insbesondere die Hypochloritbleichechtheit und die Chlorbadewasserechtheit hervorgehoben werden können. Nicht fixierte Anteile lassen sich leicht auswaschen.

**Beispiel 2**

Zur Synthese des erfindungsgemäßen Vinylsulfonyl-Derivates der erfindungsgemäßen Azoverbindung von Beispiel 1 stellt man eine wäßrige Lösung der Azoverbindung von Beispiel 1 mit Natronlauge auf einen pH-Wert von 10 bis 11, erwärmt die alkalische Lösung auf 40° C und hält sie bei dieser Temperatur während einer Stunde unter gleichzeitiger Aufrechterhaltung des pH-Wertes zwischen 10 und 11. Anschließend stellt man die Lösung mittels Salzsäure auf einen pH-Wert von 5 bis 5,5, klärt bei 50° C mittels Kieselgur und Filtration und isoliert die erfindungsgemäße Azoverbindung, die, in Form der freien Säure geschrieben, die Formel

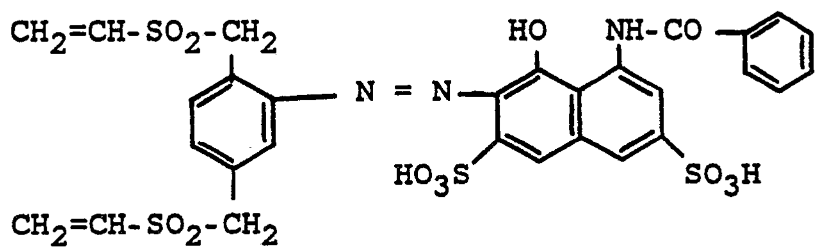

($\lambda_{max}$ = 511 nm)

besitzt, aus dem Filtrat durch Eindampfen oder Sprühtrocknung.

Auch diese erfindungsgemäße Azoverbindung besitzt sehr gute faserreaktive Farbstoffeigenschaften und färbt beispielsweise Baumwolle in kräftigen, roten Tönen mit den in Beispiel 1 angegebenen guten Echtheitseigenschaften.

**Beispiele 3 bis 191**

In den nachfolgenden Tabellenbeispielen sind weitere erfindungsgemäße Azoverbindungen entsprechend der allgemeinen Formel (A)

D — N = N — K (A)

mit Hilfe ihrer Formelreste D und K entsprechend den Diazokomponenten D-$NH_2$ und Kupplungskomponenten H-K beschrieben. Sie lassen sich in erfindungsgemäßer Weise, beispielsweise gemäß den obigen Ausführungsbeispielen durch Kupplung der aus den Tabellenbeispielen ersichtlichen Kupplungskomponente H-K mit dem Diazoniumsalz des aus den Tabellenbeispielen ersichtlichen Amins D-$NH_2$, herstellen und besitzen sehr gute faserreaktive Farbstoffeigenschaften. Sie liefern farbstarke Färbungen und Drucke auf den in der Beschreibung genannten Materialien, wie insbesondere Cellulosefasermaterialien, nach den für faserreaktive Farbstoffe üblichen Applikations- und Fixiermethoden, mit den in jeweiligen Tabellenbeispiel angegebenen Farbton (hier auf Baumwolle) mit guten Echtheitseigenschaften.

Die für D stehenden spezifischen Formelreste $D_1$ bis $D_8$ haben folgende Bedeutung:

$D_1$ = 2,5-Di-[(ß-sulfatoethylsulfonyl)-methyl]-anilin
$D_2$ = 3,4-Di-[(ß-sulfatoethylsulfonyl)-methyl]-anilin
$D_3$ = 2,4-Di-[(ß-sulfatoethylsulfonyl)-methyl]-anilin
$D_4$ = 2,5-Di-(vinylsulfonyl-methyl)-anilin
$D_5$ = 3,4-Di-(vinylsulfonyl-methyl)-anilin
$D_6$ = 2,4-Di-(vinylsulfonyl-methyl)-anilin
$D_7$ = 2,5-Di-[(ß-phosphatoethylsulfonyl)-methyl]-anilin
$D_8$ = 2,5-Di-[(ß-thiosulfatoethylsulfonyl)-methyl]-anilin.

| Bsp. | Rest D | Rest K | Farbton |
|---|---|---|---|
| 3 | $D_1$ | 4-[N,N-Bis-(ß-sulfatoethyl)]-amino-phenyl | gelbstichig rot |
| 4 | $D_2$ | dito | dito |
| 5 | $D_3$ | dito | dito |
| 6 | $D_1$ | 4-[N-Ethyl-N-(ß-sulfatoethyl)]-amino-phenyl | dito |
| 7 | $D_2$ | dito | dito |
| 8 | $D_1$ | 2-Acetylamino-4-[N,N-bis-(ß-sulfatoethyl)]-amino-phenyl | rot |
| 9 | $D_2$ | dito | dito |
| 10 | $D_3$ | dito | dito |
| 11 | $D_7$ | dito | dito |
| 12 | $D_8$ | dito | dito |
| 13 | $D_1$ | 2-Acetylamino-5-methoxy-4-[N,N-bis-(ß-sulfatoethyl)]-amino-phenyl | rubin |
| 14 | $D_2$ | dito | dito |
| 15 | $D_8$ | dito | dito |
| 16 | $D_1$ | 2-Methylsulfonylamino-4-[N,N-bis-(ß-sulfatoethyl)]-amino-phenyl | blaustichig rot |
| 17 | $D_2$ | dito | dito |

| Bsp. | Rest D | Rest K | Farbton |
|---|---|---|---|
| 18 | $D_8$ | dito | dito |
| 19 | $D_1$ | 3-Chlor-2-methylsulfonylamino-4-[N,N-bis-(ß-sulfatoethyl)]-amino-phenyl | dito |
| 20 | $D_2$ | dito | dito |
| 21 | $D_1$ | 4-[N-(ß-Cyanoethyl)-N-(ß-sulfato-ethyl)]-amino-phenyl | dito |
| 22 | $D_2$ | dito | rot |
| 23 | $D_1$ | 4-[N-(ß-Cyanoethyl)-N-(ß,γ-di-sulfato-propyl)]-amino-phenyl | gelbstichig rot |
| 24 | $D_2$ | dito | rot |
| 25 | $D_1$ | 4-[N-Benzyl-N-(ß-sulfatoethyl)]-amino-phenyl | gelbstichig rot |
| 26 | $D_2$ | dito | rot |
| 27 | $D_3$ | dito | rot |
| 28 | $D_1$ | 4-[N-Benzyl-N-(ß,γ-disulfato-propyl)]-amino-phenyl | gelbstichig rot |
| 29 | $D_2$ | dito | rot |
| 30 | $D_1$ | 2-Trifluormethyl-4-[N,N-bis-(ß-sulfatoethyl)]-amino-phenyl | gelbstichig rot |
| 31 | $D_2$ | dito | dito |

| Bsp. | Rest D | Rest K | Farbton |
|---|---|---|---|
| 32 | $D_3$ | dito | dito |
| 33 | $D_7$ | dito | dito |
| 34 | $D_8$ | dito | dito |
| 35 | $D_1$ | 2-Cyano-4-[N,N-bis-(ß-sulfato-ethyl)]-amino-phenyl | dito |
| 36 | $D_2$ | dito | dito |
| 37 | $D_1$ | 2-Methylsulfonyl-5-[N,N-bis-(ß-sulfatoethyl)]-amino-phenyl | dito |
| 38 | $D_2$ | dito | dito |
| 39 | $D_1$ | 2-Ethylsulfonyl-4-[N,N-bis-(ß-sulfatoethyl)]-amino-phenyl | dito |
| 40 | $D_2$ | dito | dito |
| 41 | $D_1$ | 2-n-Butyl-sulfonyl-5-[N,N-bis-(ß-sulfatoethyl)]-amino-phenyl | dito |
| 42 | $D_2$ | dito | dito |
| 43 | $D_1$ | 2-Diethylsulfamoyl-4-[N,N-bis-(ß-sulfatoethyl)]-amino-phenyl | dito |
| 44 | $D_2$ | dito | dito |
| 45 | $D_1$ | 2-Phenylsulfamoyl-4-[N,N-bis-(ß-sulfatoethyl)]-amino-phenyl | dito |

| Bsp. | Rest D | Rest K | Farbton |
|---|---|---|---|
| 46 | $D_2$ | dito | dito |
| 47 | $D_1$ | 2-[N,N-Di-(ß-sulfatoethyl)-sulfamoyl]-4-diethylamino-phenyl | gelbstichig rot |
| 48 | $D_2$ | dito | rot |
| 49 | $D_1$ | 2-Carbamoyl-4-[N,N-bis-(ß-sulfatoethyl)]-amino-phenyl | gelbstichig rot |
| 50 | $D_2$ | dito | dito |
| 51 | $D_1$ | 2-Diethylcarbamoyl-4-[N,N-bis-(ß-sulfatoethyl)]-amino-phenyl | dito |
| 52 | $D_2$ | dito | dito |
| 53 | $D_1$ | 2-[N,N-Di-(ß-sulfatoethyl)-carbamoyl]-4-diethylamino-phenyl | dito |
| 54 | $D_2$ | dito | dito |
| 55 | $D_3$ | dito | dito |
| 56 | $D_1$ | 2-[N-Methyl-N-(ß-sulfatoethyl)]-carbamoyl-4-diethylamino-phenyl | dito |
| 57 | $D_2$ | dito | dito |
| 58 | $D_1$ | 2-[N-Methyl-N-(ß-sulfatoethyl)]-sulfamoyl-4-diethylamino-phenyl | dito |
| 59 | $D_2$ | dito | dito |

| Bsp. | Rest D | Rest K | Farbton |
|---|---|---|---|
| 60 | $D_1$ | 3-Chlor-4-N-(ß-sulfatoethyl)-amino-phenyl | rotstichig gelb |
| 61 | $D_2$ | dito | dito |
| 62 | $D_1$ | 3-Chlor-4-N-(ß,γ-disulfato-propyl)-amino-phenyl | dito |
| 63 | $D_2$ | dito | dito |
| 64 | $D_1$ | 2-Acetylamino-5-chlor-4-N-(ß-sulfato-propyl)-amino-phenyl | gelbstichig rot |
| 65 | $D_2$ | dito | dito |
| 66 | $D_1$ | 2-Acetylamino-5-chlor-4-N-(ß,γ-disulfato-propyl)-amino-phenyl | dito |
| 67 | $D_2$ | dito | dito |
| 68 | $D_1$ | N-(ß-Sulfatoethyl)-2-methyl-indol-3-yl | gelb |
| 69 | $D_2$ | dito | gelb |
| 70 | $D_3$ | dito | gelb |
| 71 | $D_1$ | N-(ß-Sulfato-propyl)-2-methyl-indol-3-yl | gelb |
| 72 | $D_2$ | dito | gelb |
| 73 | $D_3$ | dito | gelb |

| Bsp. | Rest D | Rest K | Farbton |
|---|---|---|---|
| 74 | $D_1$ | 1-N-(ß-Sulfatoethyl)-4-methyl-5-carbamoyl-2-hydroxy-6-oxo-pyrid-3-yl | zitronengelb |
| 75 | $D_2$ | dito | dito |
| 76 | $D_1$ | 1-N-(ß-Sulfato-propyl)-4-methyl-5-carbamoyl-2-hydroxy-6-oxo-pyrid-3-yl | dito |
| 77 | $D_2$ | dito | dito |
| 78 | $D_1$ | 2-Acetylamino-5-sulfo-4-amino-phenyl | goldgelb |
| 79 | $D_2$ | dito | dito |
| 80 | $D_3$ | dito | dito |
| 81 | $D_4$ | dito | dito |
| 82 | $D_5$ | dito | dito |
| 83 | $D_6$ | dito | dito |
| 84 | $D_7$ | dito | dito |
| 85 | $D_8$ | dito | dito |
| 86 | $D_1$ | 4-[N-Ethyl-N-(3-sulfo-benzyl)]-amino-phenyl | gelbstichig rot |
| 87 | $D_2$ | dito | dito |

| Bsp. | Rest D | Rest K | Farbton |
|---|---|---|---|
| 88 | $D_3$ | dito | dito |
| 89 | $D_4$ | dito | dito |
| 90 | $D_7$ | dito | dito |
| 91 | $D_1$ | 4-[N,N-Bis-(3-sulfo-benzyl)]-amino-phenyl | dito |
| 92 | $D_4$ | dito | dito |
| 93 | $D_5$ | dito | dito |
| 94 | $D_1$ | 4-[N-Benzyl-N-(ß-sulfatoethyl)]-amino-phenyl | dito |
| 95 | $D_2$ | dito | dito |
| 96 | $D_1$ | 4-[N-Benzyl-N-(γ-sulfato-propyl)]-amino-phenyl | dito |
| 97 | $D_2$ | dito | dito |
| 98 | $D_1$ | 4-[N-Ethyl-N-(ß-sulfatoethyl)]-amino-phenyl | dito |
| 99 | $D_2$ | dito | dito |
| 100 | $D_1$ | 4-[N-Ethyl-N-(γ-sulfato-propyl)]-amino-phenyl | dito |
| 101 | $D_2$ | dito | dito |
| 102 | $D_4$ | 2-Chlor-4-[N,N-bis-(γ-sulfato-propyl)]-amino-phenyl | dito |

| Bsp. | Rest D | Rest K | Farbton |
|---|---|---|---|
| 103 | $D_5$ | dito | dito |
| 104 | $D_4$ | 2-Trifluormethyl-4-[N,N-bis-(γ-sulfato-propyl)]-amino-phenyl | dito |
| 105 | $D_5$ | dito | dito |
| 106 | $D_4$ | 2-Chlor-4-[N,N-bis-(ß-sulfato-ethyl)]-amino-phenyl | dito |
| 107 | $D_5$ | dito | dito |
| 108 | $D_6$ | dito | dito |
| 109 | $D_4$ | 2-Trifluormethyl-4-[N,N-bis-(ß-sulfatoethyl)]-amino-phenyl | dito |
| 110 | $D_5$ | dito | dito |
| 111 | $D_6$ | dito | dito |
| 112 | $D_4$ | 2-Phenylsulfamoyl-4-[N,N-bis-(γ-sulfato-propyl)]-amino-phenyl | dito |
| 113 | $D_5$ | dito | dito |
| 114 | $D_4$ | 2-Phenylsulfamoyl-4-[N,N-bis-(ß-sulfatoethyl)]-amino-phenyl | dito |
| 115 | $D_5$ | dito | dito |
| 116 | $D_1$ | 2-[N-(ß-sulfatoethyl)-sulfamoyl]-4-diethylamino-phenyl | dito |

| Bsp. | Rest D | Rest K | Farbton |
|---|---|---|---|
| 117 | $D_2$ | dito | dito |
| 118 | $D_1$ | 4-{N-Ethyl-N-[ß-(3-sulfophenyl)-ethyl]}-amino-phenyl | rot |
| 119 | $D_2$ | dito | dito |
| 120 | $D_1$ | 3-Chlor-4-(3'-sulfo-benzyl)-amino-phenyl | gelb |
| 121 | $D_2$ | dito | dito |
| 122 | $D_1$ | 1-(3'-Sulfophenyl)-3-methyl-5-amino-pyrazol-4-yl | rotstichig gelb |
| 123 | $D_2$ | dito | dito |
| 124 | $D_1$ | 1-(4'-Sulfophenyl)-3-methyl-5-amino-pyrazol-4-yl | dito |
| 125 | $D_2$ | dito | dito |
| 126 | $D_1$ | 2-Methyl-sulfoindol-3-yl | gelb |
| 127 | $D_2$ | dito | gelb |
| 128 | $D_1$ | 1,2-Dimethyl-sulfoindol-3-yl | gelb |
| 129 | $D_2$ | dito | gelb |
| 130 | $D_1$ | N-(3'-Sulfobenzyl)-2-methyl-indol-3-yl | gelb |
| 131 | $D_2$ | dito | gelb |

| Bsp. | Rest D | Rest K | Farbton |
|---|---|---|---|
| 132 | $D_4$ | N-(3-Sulfobenzyl)-2-methyl-sulfoindol-3-yl | gelb |
| 133 | $D_5$ | dito | gelb |
| 134 | $D_1$ | 1-N-Ethyl-4-methyl-5-sulfomethyl-2-hydroxy-6-oxo-pyrid-3-yl | zitronen-gelb |
| 135 | $D_2$ | dito | dito |
| 136 | $D_1$ | 1-N-(n-Butyl)-4-methyl-5-sulfo-methyl-2-hydroxy-6-oxo-pyrid-3-yl | dito |
| 137 | $D_2$ | dito | dito |
| 138 | $D_1$ | 1-N-(ß-Sulfatoethyl)-4-methyl-2-hydroxy-6-oxo-pyrid-3-yl | dito |
| 139 | $D_2$ | dito | dito |
| 140 | $D_3$ | dito | dito |
| 141 | $D_1$ | 1-N-(ß-Sulfatoethyl)-4-methyl-5-cyano-2-hydroxy-6-oxo-pyrid-3-yl | dito |
| 142 | $D_2$ | dito | dito |
| 143 | $D_3$ | dito | dito |
| 144 | $D_1$ | 1-N-(ß-Sulfatoethyl)-4-methyl-5-carbamoyl-2-hydroxy-6-oxo-pyrid-3-yl | dito |
| 145 | $D_2$ | dito | dito |

| Bsp. | Rest D | Rest K | Farbton |
|---|---|---|---|
| 146 | $D_3$ | dito | dito |
| 147 | $D_1$ | 1-N-Benzyl-4-methyl-5-sulfomethyl-2-hydroxy-6-oxo-pyrid-3-yl | dito |
| 148 | $D_2$ | dito | dito |
| 149 | $D_4$ | 1-(4'-Sulfophenyl)-3-carboxy-pyrazol-5-on-4-yl | orange |
| 150 | $D_5$ | dito | orange |
| 151 | $D_1$ | 1-(4'-Sulfophenyl)-3-methyl-pyrazol-5-on-4-yl | orange |
| 152 | $D_2$ | dito | orange |
| 153 | $D_1$ | 1-(2',5'-Disulfophenyl)-3-methyl-pyrazol-5-on-4-yl | orange |
| 154 | $D_5$ | dito | dito |
| 155 | $D_1$ | 1-(2',5-Dichlor-4-sulfo-phenyl)-3-methyl-pyrazol-5-on-4-yl | orange |
| 156 | $D_2$ | dito | orange |
| 157 | $D_1$ | (2-Methyl-5-methoxy-4-sulfo-phenylamido)-acetoacetyl | grünstichig gelb |
| 158 | $D_2$ | dito | dito |
| 159 | $D_3$ | dito | dito |

| Bsp. | Rest D | Rest K | Farbton |
|---|---|---|---|
| 160 | $D_1$ | 1-Acetylamino-3,6-disulfo-8-hydroxy-naphth-7-yl | rot |
| 161 | $D_5$ | dito | dito |
| 162 | $D_6$ | dito | dito |
| 163 | $D_2$ | 1-Benzoylamino-3,6-disulfo-8-hydroxy-naphth-7-yl | rot |
| 164 | $D_3$ | dito | rot |
| 165 | $D_1$ | 1-Benzoylamino-4,6-disulfo-8-hydroxy-naphthyl-7-yl | gelbstichig rot |
| 166 | $D_2$ | dito | dito |
| 167 | $D_3$ | dito | dito |
| 168 | $D_1$ | 1-[3'-(ß-Chlorethylsulfonyl)-benzoyl]-amino-3,6-disulfo-8-hydroxy-naphth-7-yl | rot |
| 169 | $D_2$ | dito | dito |
| 170 | $D_3$ | dito | dito |
| 171 | $D_1$ | 1-[N'-(3'-ß-Chlorethylsulfonyl-phenyl)]-ureido-3,6-disulfo-8-hydroxy-naphth-7-yl | dito |
| 172 | $D_2$ | dito | dito |
| 173 | $D_3$ | dito | dito |

| Bsp. | Rest D | Rest K | Farbton |
|---|---|---|---|
| 174 | $D_1$ | 2-[N-Methyl-N-(ß-sulfatoethyl-sulfonyl)]-amido-6-sulfo-8-hydroxy-naphth-7-yl | dito |
| 175 | $D_2$ | dito | dito |
| 176 | $D_3$ | dito | dito |
| 177 | $D_1$ | 3,6-Disulfo-8-hydroxy-naphth-7-yl | dito |
| 178 | $D_2$ | dito | dito |
| 179 | $D_3$ | dito | dito |
| 180 | $D_1$ | 2-Acetylamino-6-sulfo-8-hydroxy-naphth-7-yl | dito |
| 181 | $D_1$ | 3-Acetylamino-6-sulfo-8-hydroxy-naphth-7-yl | orange |
| 182 | $D_1$ | 5-Sulfo-1-hydroxy-naphth-7-yl | rot |
| 183 | $D_1$ | 4-Sulfo-1-hydroxy-naphth-7-yl | rot |

Kupferkomplexverbindungen (erhältlich durch oxidative Kupferung):

| | | | |
|---|---|---|---|
| 184 | 6-Oxi-$D_2$ | 1-(4'-Sulfophenyl)-3-carboxy-5-oxi-pyrazol-4-yl | braun |
| 185 | 6-Oxi-$D_5$ | dito | braun |
| 186 | 6-Oxi-$D_2$ | 1-Acetylamino-3,6-disulfo-8-oxi-naphth-7-yl | rotstichig blau |

| Bsp. | Rest D | Rest K | Farbton |
|---|---|---|---|
| 187 | 6-Oxi-$D_5$ | dito | dito |
| 188 | 6-Oxi-$D_2$ | 3-(1'-Acetylamino-3',6'-disulfo-8'-hydroxy-naphth-7'-yl)-azo-6-sulfo-8-oxi-naphth-7-yl | dunkelblau |
| 189 | 6-Oxi-$D_5$ | dito | dito |
| 190 | 6-Oxi-$D_2$ | 4-Sulfo-1-oxi-naphth-2-yl | blaustichig rot |
| 191 | 6-Oxi-$D_5$ | dito. | dito |

**Beispiel 192**

Eine Mischung mit einem pH-Wert von 5 bis 5,5 und einer Temperatur von 0 bis 5° C aus 450 Teilen einer wäßrigen Lösung von 61,7 Teilen 4-Aminobenzol-[2',5'-di-(ß-sulfatoethylsulfonyl)-methyl]-carbonsäureanilid und 20 Volumenteilen einer wäßrigen 5n-Natriumnitritlösung wird langsam in ein Gemisch aus 30 Volumenteilen konzentrierter Salzsäure und 300 Teilen Eis eingerührt. Man rührt noch eine Stunde bei 0 bis 5° C nach und zerstört überschüssige salpetrige Säure mit Amidosulfonsäure. In diese Diazoniumsalzsuspension gibt man 28,4 Teile 1-(4'-Sulfophenyl)-3-carboxy-5-pyrazolon und führt die Kupplungsreaktion bei einem pH-Wert von 5 und einer Temperatur zwischen 15 und 20° C während mehrerer Stunden durch. Anschließend klärt man die Syntheselösung bei 50 °C mittels Kieselgur und Filtration und isoliert die erhaltene erfindungsgemäße Azoverbindung als Alkalimetallsalz durch Eindampfen des Filtrates unter reduziertem Druck oder durch Sprühtrocknung.

Die erfindungsgemäße Azoverbindung besitzt, in Form der freien Säure geschrieben, die Formel

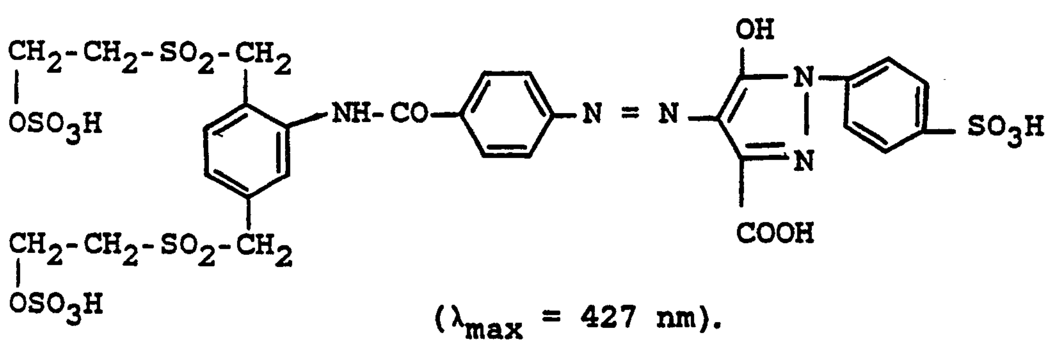

($\lambda_{max}$ = 427 nm).

**Beispiele 193 bis 210**

In den nachfolgenden Tabellenbeispielen sind weitere erfindungsgemäße Azoverbindungen entsprechend der allgemeinen Formel (B)

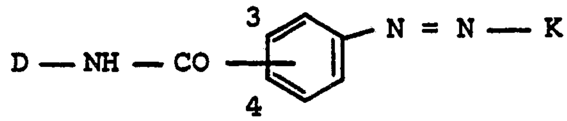

(B)

| Bsp. | Rest D | Amidocarbonyl in ...-Stellg. | Rest K | Farbton |
|---|---|---|---|---|
| 193 | $D_2$ | 4- | 1-(4'-Sulfophenyl)-3-carboxy-pyrazol-5-on-4-yl | gelb |
| 194 | $D_3$ | 4- | dito | gelb |
| 195 | $D_4$ | 4- | dito | gelb |
| 196 | $D_5$ | 4- | dito | gelb |
| 197 | $D_6$ | 4- | dito | gelb |
| 198 | $D_4$ | 3- | dito | gelb |

| Bsp. | Rest D | Amidocarbonyl in ...-Stellg. | Rest K | Farbton |
|---|---|---|---|---|
| 199 | $D_1$ | 4- | 1-(4'-Sulfophenyl)-3-methyl-pyrazol-5-on-4-yl | gelb |
| 200 | $D_2$ | 4- | dito | gelb |
| 201 | $D_3$ | 4- | dito | gelb |
| 202 | $D_1$ | 4- | 1-Acetylamino-3,6-disulfo-8-hydroxy-naphth-7-yl | blaustichig rot |
| 203 | $D_2$ | 4- | dito | dito |
| 204 | $D_3$ | 4- | dito | dito |
| 205 | $D_4$ | 4- | dito | dito |
| 206 | $D_1$ | 4- | 1-Benzoylamino-3,6-disulfo-8-hydroxy-naphth-7-yl | dito |
| 207 | $D_2$ | 4- | dito | dito |
| 208 | $D_3$ | 4- | dito | dito |
| 209 | $D_1$ | 4- | 1-Benzoylamino-4,6-disulfo-8-hydroxy-naphth-7-yl | rot |
| 210 | $D_2$ | 4- | dito | rot |

**Beispiel 211**

49,7 Teile 2,5-Di-(ß-sulfatoethylsulfonyl-methyl)-anilin werden gemäß den Angaben des Beispiels 1 diazotiert, und die erhaltene Diazoniumverbindung wird mit 30,8 Teilen 1-Amino-3,6-disulfo-8-naphthol bei einem pH-Wert zwischen 1 und 2 und einer Temperatur zwischen 10 und 20° C gekuppelt. Die erhaltene Monoazoverbindung wird sodann in ihrer Syntheselösung mit der wäßrigen, salzsauren Lösung des Diazoniumsalzes aus 17,3 Teilen Anilin-4-sulfonsäure versetzt, der Ansatz auf einen pH-Wert von 7 gestellt und die Kupplungsreaktion zur Disazoverbindung bei einem pH-Wert zwischen 5 und 7 und einer

Temperatur von 10 bis 20 °C zu Ende geführt. Die Syntheselösung wird anschließend geklärt und die erfindungsgemäße Disazoverbindung in üblicher Weise isoliert, beispielsweise durch Sprüh- oder Gefriertrocknung. Man erhält ein schwarzes, elektrolythaltiges Pulver des Alkalimetallsalzes der Verbindung der Formel (in Form der freien Säure)

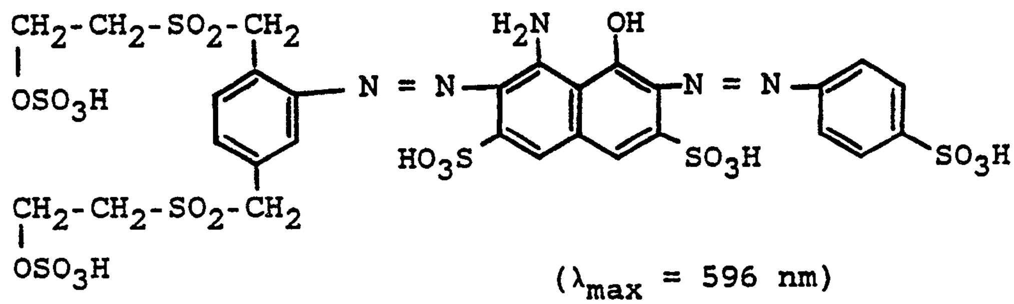

($\lambda_{max}$ = 596 nm)

die sehr gute faserreaktive Farbstoffeigenschaften besitzt und beispielsweise Baumwolle nach den für faserreaktive Farbstoffe üblichen Färbe- und Druckverfahren in echten marineblauen Tönen färbt.

**Beispiele 212 bis 260**

In den nachfolgenden Tabellenbeispielen sind weitere erfindungsgemäße Disazoverbindungen entsprechend einer allgemeinen Formel (C)

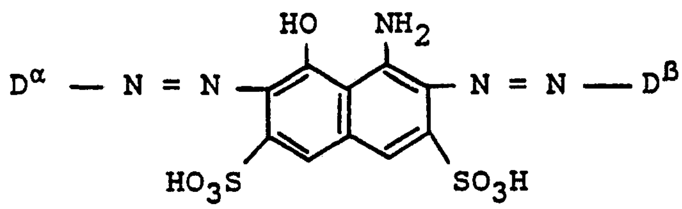

(C)

mit Hilfe der dort angegebenen Formelreste beschrieben. Sie lassen sich in erfindungsgemäßer Weise, beispielsweise analog den vorangegangenen Ausführungsbeispielen, durch Kupplung von 1-Amino-3,6-disulfo-8-naphthol mit den Diazoniumsalzen der Aminoverbindungen der Formeln $D^{\alpha}$-$NH_2$ und $D^{\beta}$-$NH_2$ herstellen. Sie besitzen ebenfalls sehr gute faserreaktive Farbstoffeigenschaften und liefern insbesondere auf Cellulosefasermaterialien farbstarke echte Färbungen und Drucke mit dem in den jeweiligen Tabellenbeispiel angegebenen Farbton.

Die Reste $D_1$ bis $D_4$ haben die früher angegebenen Bedeutungen.

| Bsp. | Rest $D^{\alpha}$ | Rest $D^{\beta}$ | Farbton |
|---|---|---|---|
| 212 | 4-Sulfo-phenyl | $D_5$ | marineblau |
| 213 | dito | $D_2$ | marineblau |
| 214 | dito | $D_3$ | marineblau |
| 215 | dito | $D_4$ | marineblau |
| 216 | $D_1$ | 4-Sulfo-phenyl | marineblau |
| 217 | $D_2$ | dito | marineblau |
| 218 | $D_3$ | dito | marineblau |

| Bsp. | Rest $D^{\alpha}$ | Rest $D^{\beta}$ | Farbton |
|---|---|---|---|
| 219 | $D_1$ | 4-(ß-Sulfatoethyl-sulfonyl)-phenyl | marineblau |
| 220 | $D_2$ | dito | marineblau |
| 221 | $D_3$ | dito | marineblau |
| 222 | 4-(ß-Sulfatoethyl-sulfonyl)-phenyl | $D_1$ | marineblau |
| 223 | dito | $D_2$ | marineblau |
| 224 | dito | $D_3$ | marineblau |
| 225 | 1,5-Disulfo-naphth-2-yl | $D_1$ | marineblau |
| 226 | dito | $D_2$ | marineblau |
| 227 | dito | $D_3$ | marineblau |
| 228 | $D_1$ | 1,5-Disulfo-naphth-2-yl | marineblau |
| 229 | $D_2$ | dito | marineblau |
| 230 | $D_3$ | dito | marineblau |
| 231 | 1-Sulfo-6-(ß-sulfatoethyl-sulfonyl)-naphth-2-yl | $D_1$ | marineblau |
| 232 | dito | $D_2$ | marineblau |

| Bsp. | Rest $D^{\alpha}$ | Rest $D^{\beta}$ | Farbton |
|---|---|---|---|
| 233 | dito | $D_3$ | marineblau |
| 234 | $D_1$ | 1-Sulfo-6-(ß-sulfatoethyl-sulfonyl)-naphth-2-yl | marineblau |
| 235 | $D_2$ | dito | marineblau |
| 236 | $D_3$ | dito | marineblau |
| 237 | 2-Sulfo-4-(ß-sulfatoethylsulfonyl)-phenyl | $D_1$ | marineblau |
| 238 | dito | $D_2$ | marineblau |
| 239 | dito | $D_3$ | marineblau |
| 240 | $D_1$ | 2-Sulfo-4-(ß-sulfatoethylsulfonyl)-phenyl | marineblau |
| 241 | $D_2$ | dito | marineblau |
| 242 | $D_3$ | dito | marineblau |
| 243 | 2-Methoxy-5-(ß-sulfatoethylsulfonyl)-phenyl | $D_1$ | marineblau |
| 244 | dito | $D_2$ | marineblau |
| 245 | dito | $D_3$ | marineblau |

| Bsp. | Rest $D^{\alpha}$ | Rest $D^{\beta}$ | Farbton |
|---|---|---|---|
| 246 | $D_1$ | 2-Methoxy-5-(ß-sulfatoethylsulfonyl)-phenyl | marineblau |
| 247 | $D_2$ | dito | marineblau |
| 248 | $D_3$ | dito | marineblau |
| 249 | 2-Brom-4-(ß-sulfatoethylsulfonyl)-phenyl | $D_1$ | marineblau |
| 250 | dito | $D_2$ | marineblau |
| 251 | dito | $D_3$ | marineblau |
| 252 | $D_1$ | 2-Brom-4-(ß-sulfato-ethylsulfonyl)-phenyl | marineblau |
| 253 | $D_2$ | dito | marineblau |
| 254 | $D_3$ | dito | marineblau |
| 255 | 2,5-Disulfo-phenyl | $D_1$ | marineblau |
| 256 | dito | $D_2$ | marineblau |
| 257 | dito | $D_3$ | marineblau |
| 258 | $D_1$ | 2,5-Disulfo-phenyl | marineblau |
| 259 | $D_2$ | dito | marineblau |
| 260 | $D_3$ | dito | marineblau |

**Beispiel A**

Synthese von 2,5-Di-(ß-Sulfatoethylsulfonyl-methyl)-anilin:

a) 93,8 Teile Mercaptoethanol werden in einem Gemisch von 200 Teilen Wasser und 75 Volumenteilen einer 33%igen wäßrigen Natronlauge gelöst; die Lösung besitzt einen pH-Wert zwischen 10 und 11. Zu dieser alkalischen Lösung gibt man 87,5 Teile 1,4-Bis-(chlormethyl)-benzol und 60,6 Teile einer 33%igen wäßrigen Natronlauge; man erwärmt den Ansatz langsam auf 80° C und hält die exotherme Reaktion bei etwa 100° C und rührt sodann den Ansatz noch 30 Minuten bei 95° C nach, verdünnt ihn mit 200 Teilen Wasser und stellt sodann mit Salzsäure einen pH-Wert von 7 ein. Nach Abkühlen auf 10° C wird vom ausgefallenen Produkt abgesaugt, dieses mit kaltem Wasser nachgewaschen und bei 50° C getrocknet. Es besitzt einen Schmelzpunkt von 89-91° C.

b) 116,2 Teile der unter a) erhaltenen Verbindung 2,5-Bis-(ß-hydroxyethyl-thio-methyl)-benzol gibt man zusammen mit 1,8 Teilen Natriumwolframat-dihydrat in 200 Volumenteilen Eisessig. Man erwärmt auf 90 bis 95° C und gibt während einiger Stunden langsam 194,3 Teile einer 35%igen wäßrigen Wasserstoffperoxidlösung hinzu, rührt den Ansatz noch eine Stunde bei 100° C nach und rührt ihn sodann in ein Gemisch aus 500 Teilen Eis und 100 Teilen Kaliumchlorid ein, saugt das ausgefallene Produkt ab, wäscht es mit Wasser nach und trocknet es. Man erhält farblose Kristalle der Verbindung 2,5-Bis-(ß-hydroxyethylsulfonyl)-benzol mit einem Schmelzpunkt von 209-212° C.

c) In eine Mischung aus 180 Volumenteilen Schwefelsäuremonohydrat und 18 Volumenteilen 65%igem Oleum gibt man bei einer Temperatur von maximal 40° C 162 Teile der unter b) erhaltenen Verbindung. Sodann gibt man bei 30 bis 38° C langsam 90,8 Teile einer Nitriersäure, bestehend zu 30 % aus Salpetersäure und 70 % Schwefelsäure, rührt anschließend den Reaktionsansatz noch 4 bis 5 Stunden bei 70° C nach und rührt ihn dann in 2000 Teile Eiswasser ein. Zur Hydrolyse der Schwefelsäureestergruppe wird die saure Lösung unter Rückfluß etwa 3 Stunden gekocht. Man kühlt den Ansatz anschließend ab, filtriert die ausgefallene Verbindung 2,5-Di-(ß-hydroxyethylsulfonylmethyl)-nitrobenzol ab und trocknet sie. Sie besitzt einen Schmelzpunkt von 125-126,5° C.

d) 128,6 Teile der unter c) erhaltenen Nitroverbindung werden in 500 Teilen Wasser bei 60° C und einem pH-Wert von 6,5 gelöst und im Autoklaven bei 80° C und einem Wasserstoffdruck von 50 bar in Gegenwart von 50 Teilen Raney-Nickel hydriert. Danach wird der Ansatz mit 1500 Teilen heißem Wasser verdünnt und bei 95° C vom Katalysator abfiltriert. Nach Abkühlen unterhalb 10° C fällt das 2,5-Di-(ß-sulfatoethylsulfonyl-methyl)-anilin aus. Es besitzt einen Schmelzpunkt von 201° C.

e) 84,3 Teile der unter d) erhaltenen Anilinverbindung gibt man innerhalb von 30 Minuten bei einer Temperatur von maximal 20° C in eine Mischung aus 200 Teilen Schwefelsäuremonohydrat und 125 Teilen 20%igem Oleum. Man rührt den Ansatz noch etwa 4 Stunden nach und rührt ihn dann in 1000 Teile Eis ein. Überschüssige Schwefelsäure wird mittels Schlämmkreide neutralisiert. Das ausgefallene Calciumsulfat wird abgesaugt und mit Wasser nachgewaschen und die vereinigten Filtrate bei 50° C zur Trockne eingedampft. Man erhält das 2,5-Di-(ß-sulfatoethylsulfonyl-methyl)-anilin mit einem Schmelzpunkt von oberhalb 360° C.

f) Die unter e) erhaltene ß-Sulfatoethylsulfonyl-Verbindung kann in deren Vinylsulfonyl-Derivat übergeführt werden, das auch zur besseren Charakterisierung der Struktur des Sulfato-Derivates dienen kann. Zur Überführung der ß-Sulfatoethylsulfonyl-Verbindung in die Vinylsulfonyl-Verbindung gibt man 30 Teile des unter e) erhaltenen salzhaltigen Produktes in 250 Teile Wasser, stellt mittels wäßriger Natronlauge einen pH-Wert zwischen 10 und 11 ein und hält ihn während einer Stunde bei 40 bis 45° C. Das entstandene 2,5-(Vinylsulfonylmethyl)-anilin fällt aus, wird abgesaugt, salzfrei gewaschen und getrocknet.

Die Vinylsulfonyl-Verbindung zeigt folgende $^1H$-NMR-Daten (in $d_6$-Dimethylsulfoxid; bei 300 MHz): $\delta$ (in ppm): 7,02 (d,1H); 6,91 (m,2H); 6,65 (d,1,H); 6,52 (dd,1H); 6,16 (dd,2H); 6,12 (dd,2H); 5,29 (s,2H); 4,14 (s,2H); 4,32 (s,2H).

**Ansprüche**

1. Verbindungen der allgemeinen Formel (1) und deren Schwermetallkomplex-Verbindungen

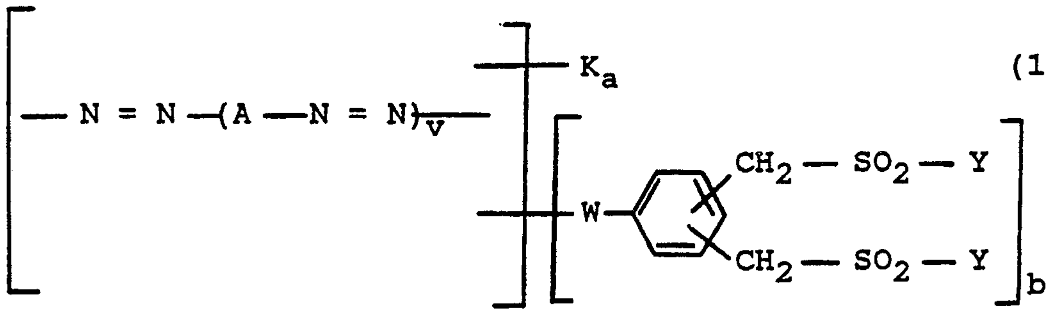

(1)

in welcher bedeuten:

A ist der bivalente Rest einer kupplungsfähigen und diazotierbaren Mittelkomponente der Benzol-, Pyrazolon- oder Naphthalinreihe, der durch in der Azochemie übliche Substituenten substituiert sein kann, wie beispielsweise durch einen oder mehrere Substituenten aus der Gruppe Hydroxy, Amino, Alkyl von 1 bis 4 C-Atomen, Alkoxy von 1 bis 4 C-Atomen, gegebenenfalls substituiertes Alkanoylamino mit 2 bis 4 C-Atomen, gegebenenfalls substituiertes Benzoylamino, Halogen, Carboxy und Sulfo, oder ist der bivalente Rest einer zweifach ankuppelbaren Kupplungskomponente, der durch in der Azochemie übliche Substituenten substituiert sein kann, wie beispielsweise solche der oben genannten Gruppe;

v steht für die Zahl Null oder 1;

K ist der Rest einer Kupplungskomponente der Benzol-, Naphthalin-, Pyrazolon-, 6-Hydroxy-2-pyridon- oder Acetoacetylarylamid-Reihe, der durch in der Azochemie übliche Substituenten substituiert sein kann, wie beispielsweise durch einen oder mehrere Substituenten aus der Gruppe Hydroxy, Amino, Alkyl von 1 bis 4 C-Atomen, Alkoxy von 1 bis 4 C-Atomen, gegebenenfalls substituiertes Alkanoylamino mit 2 bis 4 C-Atomen, gegebenenfalls substituiertes Benzoylamino, Halogen, Carboxy und Sulfo;

W ist eine direkte kovalente Bindung oder eine Gruppe der Formel (2)

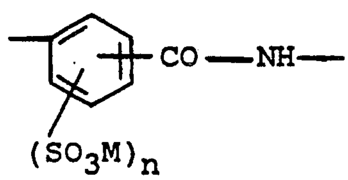

(2)

in welcher M die obengenannte Bedeutung hat und n für die Zahl Null, 1 oder 2 steht,

a steht für die Zahl Null oder 1;

b steht für die Zahl 1 oder 2;

Y ist die Vinylgruppe oder ist die Ethylgruppe, die in ß-Stellung durch einen Substituenten substituiert ist, der mittels Alkali unter Bildung der Vinylgruppe eliminierbar ist.

2. Verbindung nach Anspruch 1 der allgemeinen Formel (3a) oder (3b)

$D - N = N \{E - N = N\}_{v} - K$ (3a)

$D^{o} - N = N - G - N = N - D^{o}$ (3b)

und eine davon abgeleitete Schwermetallkomplex-Verbindung, wobei in diesen Formeln bedeuten:

K und v haben die in Anspruch 1 genannten Bedeutungen;

D ist der Rest der allgemeinen Formel (4)

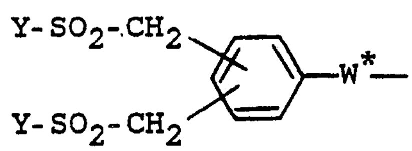

(4)

in welcher Y die in Anspruch 1 genannte Bedeutung hat und W* eine direkte Bindung oder eine Gruppe der allgemeinen Formel (2a)

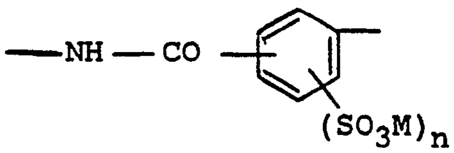

(2a)

mit M und n der in Anspruch 1 genannten Bedeutung ist;
E ist der Rest einer kupplungs- und diazotierbaren Verbindung, die zum Aufbau von Disazoverbindungen mit Farbstoffeigenschaften eingesetzt wird und die der Benzol-, Pyrazolon- oder Naphthalinreihe angehört und durch einen oder mehrere Substituenten aus der Gruppe Hydroxy, Amino, Alkyl von 1 bis 4 C-Atomen, Alkoxy von 1 bis 4 C-Atomen, gegebenenfalls substituiertes Alkanoylamino mit 2 bis 4 C-Atomen, gegebenenfalls substituiertes Benzoylamino oder Ureido, Halogen, Carboxy und Sulfo substituiert sein kann;
D° stellt jedes, zueinander gleich oder voneinander verschieden, einen Rest der oben definierten Gruppe D dar, oder einer der Reste D° ist eine Gruppe D und der andere Rest D° ist ein Benzolrest oder ein Naphthalinrest, die beide durch in der Azochemie übliche Substituenten, wie beispielsweise einen oder mehrere Substituenten aus der Gruppe Hydroxy, Alkyl von 1 bis 4 C-Atomen, Alkoxy von 1 bis 4 C-Atomen, Alkanoylamino mit 2 bis 4 C-Atomen, gegebenenfalls substituiertes Benzoylamino, Halogen, Nitro, Carboxy und Sulfo und/oder durch eine oder zwei faserreaktive Gruppen, wie beispielsweise aus der heterocyclischen Reihe oder Gruppen der Formel $-SO_2-Y$ mit Y einer der oben genannten Bedeutungen, substituiert sein können;
G ist der bivalente Rest einer zweifach kuppelbaren Kupplungskomponente der Benzol- oder Naphthalinreihe, der durch Hydroxy- und/oder Aminogruppen substituiert ist und durch weitere Substituenten, wie beispielsweise einen oder mehrere Substituenten aus der Gruppe Alkyl von 1 bis 4 C-Atomen, Alkoxy von 1 bis 4 C-Atomen, Sulfo, Carboxy, Ureido, Alkanoylamino mit 2 bis 4 C-Atomen und Halogen substituiert sein kann.

3. Verbindung nach Anspruch 1 entsprechend der allgemeinen Formel (5a)

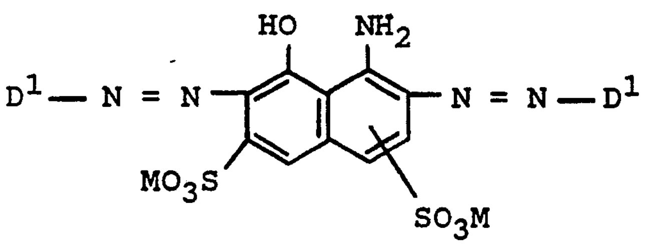

(5a)

in welcher
M ein Wasserstoffatom oder ein Alkalimetall ist und
$D^1$ jedes, zueinander gleich oder voneinander verschieden, ein Rest der allgemeinen Formel (4)

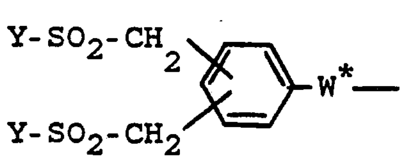

(4)

in welcher Y und W* die in Anspruch 1 bzw. 2 genannten Bedeutungen haben, ist oder der eine Rest $D^1$ eine Gruppe der allgemeinen Formel (4) ist und der andere Rest $D^1$ ein Rest der allgemeinen Formel (6a), (6b) oder (6c)

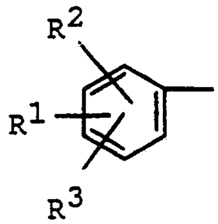

(6a)

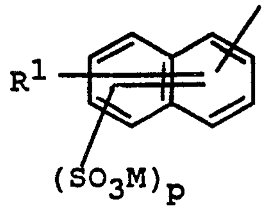

(6b)

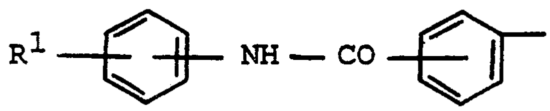

(6c)

ist, in welchen
$R^1$ ein Wasserstoffatom oder eine Sulfogruppe oder eine Gruppe der Formel Y-$SO_2$- mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet (wobei diese Gruppe im Falle von p gleich Null ein Wasserstoffatom bedeutet) und
M die obengenannte Bedeutung hat.

4. Verbindung nach Anspruch 1 entsprechend der allgemeinen Formel (5b)

$D - N = N -(E^1 - N = N)_v - K$ (5b)

in welcher
D ein Rest der allgemeinen Formel (4)

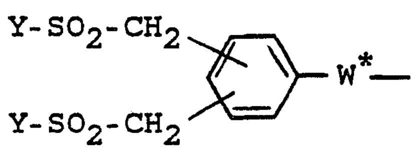

(4)

mit Y und W* der in Anspruch 1 bzw. 2 genannten Bedeutungen ist,
$E^1$ ein Rest der allgemeinen Formel (7a), (7b), (7c) oder (7d)

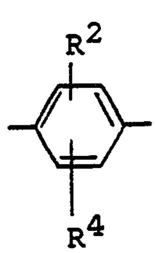

(7a)

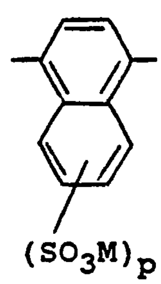

(7b)

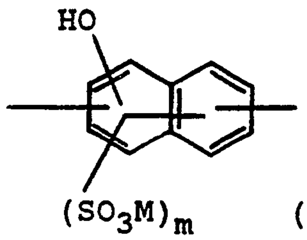 (7c) 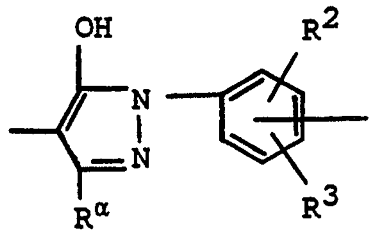 (7d)

in welchen

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$ Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^4$ ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N′-Phenyl-ureidogruppe, eine N′-Alkyl-ureidogruppe mit 1 bis 4 C-Atomen im Alkylrest, eine Phenylsulfonylgruppe oder eine Alkylsulfonylgruppe von 1 bis 4 C-Atomen ist,

M ein Wasserstoffatom oder ein Alkalimetall ist,

p die Zahl Null, 1 oder 2 bedeutet (wobei diese Gruppe im Falle von p gleich Null ein Wasserstoffatom bedeutet),

m die Zahl 1 oder 2 bedeutet und

$R^{\alpha}$ für Wasserstoff, Alkyl von 1 bis 4 C-Atomen, Cyano, Carboxy, Carbalkoxy von 2 bis 5 C-Atomen, Carbamoyl oder Phenyl steht,

v ist die Zahl 1 oder 2;

K ist ein Rest der allgemeinen Formel (9a) bis (9g)

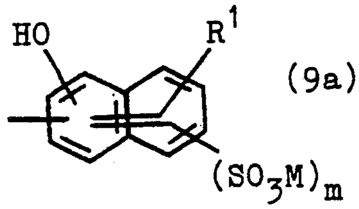

(9a)

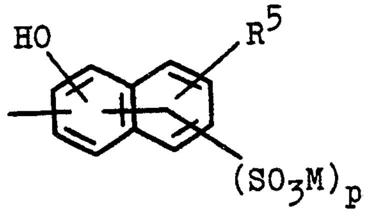

(9b)

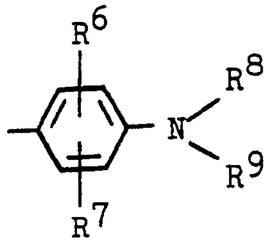

(9c)

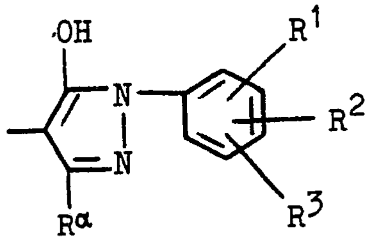

(9d)

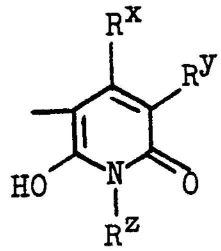

(9e)

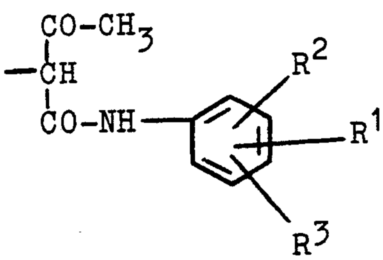

(9f)

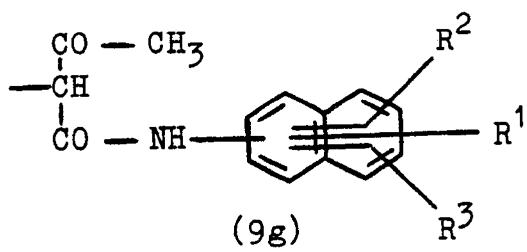

(9g)

in welchen

$R^1$ ein Wasserstoffatom oder eine Sulfogruppe oder eine Gruppe der Formel Y-$SO_2$- mit Y der in Anspruch 1 genannten Bedeutung ist,

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^\alpha$ für Wasserstoff, Alkyl von 1 bis 4 C-Atomen, Cyano, Carboxy, Carbalkoxy von 2 bis 5 C-Atomen, Carbonamido oder Phenyl steht,

M ein Wasserstoffatom oder ein Alkalimetall ist,

m die Zahl 1 oder 2 bedeutet,

p für die Zahl Null, 1 oder 2 steht (wobei diese Gruppe im Falle von p gleich Null ein Wasserstoffatom bedeutet),

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy und/oder durch -$SO_2$-Y mit Y obiger Bedeutung substituiertes Benzoylamino ist,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureido ist,

$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,

$R^9$ Alkyl von 1 bis 4 C-Atomen, das durch Hydroxy, Cyan, Carboxy, Sulfo, Sulfato, Methoxycarbonyl,

Ethoxycarbonyl oder Acetoxy substituiert sein kann, ist oder Benzyl oder Phenyl oder durch Alkyl von 1 bis 4 C-Atomen, Alkoxy von 1 bis 4 C-Atomen, Chlor und/oder Sulfo substituiertes Phenyl ist,
$R^x$ Wasserstoff oder Alkyl von 1 bis 4 C-Atomen oder durch Alkoxy von 1 bis 4 C-Atomen oder Cyano substituiertes Alkyl von 1 bis 4 C-Atomen ist,
$R^y$ Wasserstoff, Sulfo oder Sulfoalkyl mit einem Alkylenrest von 1 bis 4 C-Atomen oder Cyano oder Carbamoyl ist und
$R^z$ Wasserstoff oder Alkyl von 1 bis 6 C-Atomen, das durch Phenyl, Sulfo, Sulfato, Carboxy, Sulfophenyl, Hydroxy, Amino, Methoxy, Ethoxy, Acetylamino, Benzoylamino oder Cyano substituiert sein kann, ist oder Cyclohexyl, Phenyl oder durch Carboxy, Sulfo, Benzoylamino, Acetylamino, Methyl, Methoxy, Cyano und/oder Chlor substituiertes Phenyl ist.

5. Verbindung nach Anspruch 1 entsprechend der allgemeinen Formel (5c)

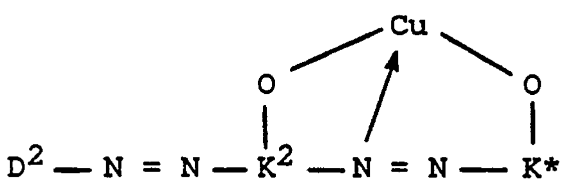

(5c)

in welcher bedeuten:
D und v haben die im Anspruch 4 genannten Bedeutungen;
$K^2$ ist ein Rest der allgemeinen Formel (8a) oder (8b)

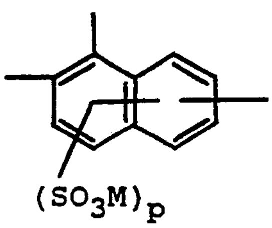

(8a)

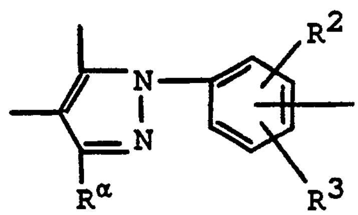

(8b)

in welchen M, p, $R^2$, $R^3$ und $R^\alpha$ die in Anspruch 4 genannten Bedeutungen haben;
K* hat einen der in Anspruch 4 genannten Bedeutungen von K, sofern K in Nachbarstellung zur Kupplungsstelle eine Hydroxygruppe besitzt.

6. Verbindung nach Anspruch 1 entsprechend der allgemeinen Formel (10a)

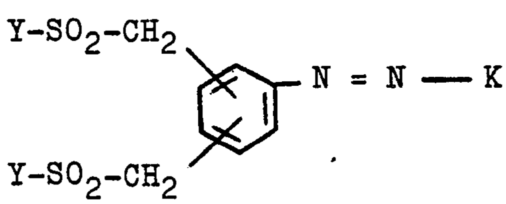

(10a)

in welcher
Y eine der in Anspruch 1 genannten Bedeutungen hat und
K der 2-Sulfo-5-acetylamino-4-amino-phenyl-Rest oder ein Rest der allgemeinen Formel (11b), (11c), (11d), (11e), (11f) oder (11g)

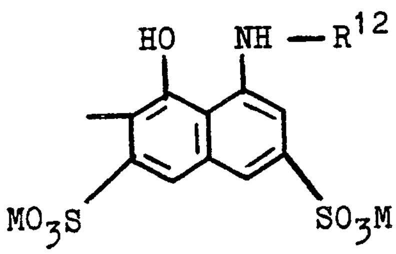

(11b)

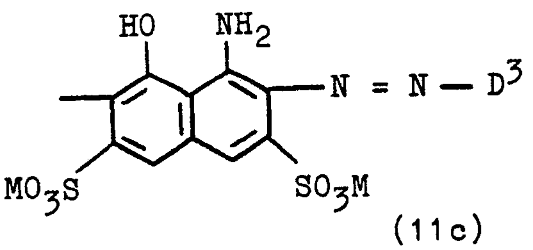

(11c)

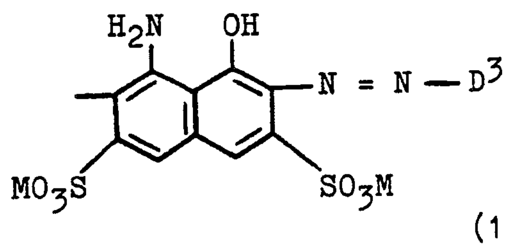

(11d)

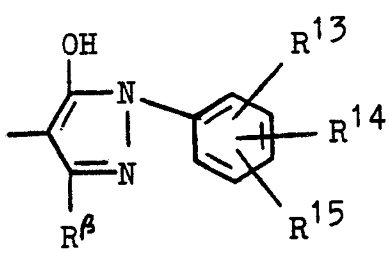

(11e)

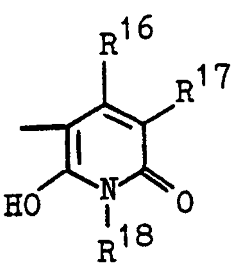

(11f)

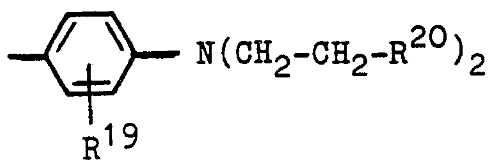

(11g)

ist, in welchen bedeuten:
M ist ein Wasserstoffatom oder ein Alkalimetall;
$R^{12}$ ist ein Wasserstoffatom, eine Alkanoylgruppe von 2 bis 4 C-Atomen oder die Benzoyl- oder 3- (ß-Chlorethylsulfonyl)-benzoyl-Gruppe;
$D^3$ ist eine Gruppe entsprechend der obengenannten und definierten allgemeinen Formeln (6a) und (6b)

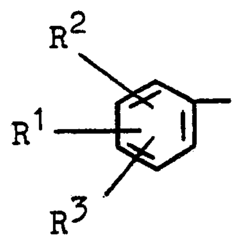

(6a)

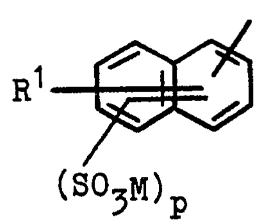

(6b)

in welchen
$R^1$ ein Wasserstoffatom oder eine Sulfogruppe oder eine Gruppe der Formel Y-$SO_2$- mit Y der oben genannten Bedeutung ist,

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet (wobei diese Gruppe im Falle von p gleich Null ein Wasserstoffatom bedeutet) und

M ein Wasserstoff oder ein Alkalimetall ist;

$R^{\beta}$ ist die Methylgruppe oder die Carboxygruppe;

$R^{13}$ ist ein Wasserstoffatom oder ein Brom- oder Chloratom oder die Methyl-, Methoxy-, Carboxy- oder Sulfogruppe;

$R^{14}$ ist ein Wasserstoffatom, ein Chloratom, die Methyl-, Methoxy- oder Sulfogruppe;

$R^{15}$ ist ein Wasserstoffatom oder die Sulfogruppe;

$R^{16}$ ist ein Wasserstoffatom oder eine Alkylgruppe von 1 bis 4 C-Atomen, oder der Phenylrest;

$R^{17}$ ist ein Wasserstoffatom oder die Cyano-, Carbamoyl-oder Sulfomethylgruppe;

$R^{18}$ ist ein Wasserstoffatom oder eine Alkylgruppe von 1 bis 4 C-Atomen, die durch eine Sulfogruppe substituiert sein kann, oder ist ein Phenylrest, der durch eine oder zwei Sulfogruppen substituiert sein kann;

$R^{19}$ ist ein Wasserstoffatom oder ein Chloratom;

$R^{20}$ ist die Hydroxy-, Sulfato- oder Sulfogruppe.

7. Verbindung nach Anspruch 1 entsprechend der allgemeinen Formel (10b)

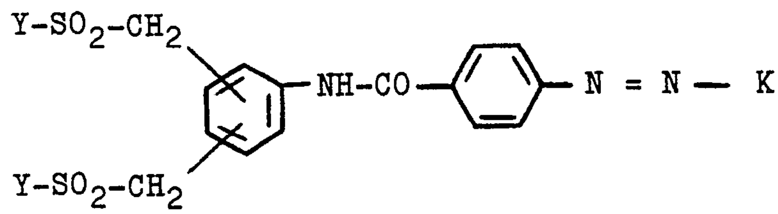

(10b)

in welcher

Y die in Anspruch 1 genannte Bedeutung besitzt und

K einen Rest der allgemeinen Formel (11b) oder (11e)

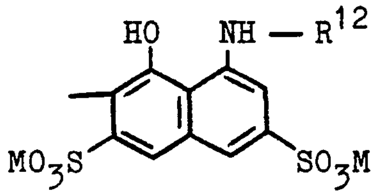

(11b)

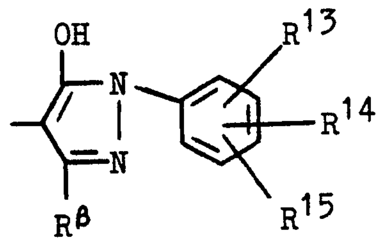

(11e)

bedeutet, in welchen

M ein Wasserstoffatom oder Alkalimetall ist,

$R^{\beta}$ die Methylgruppe oder die Carboxygruppe ist,

$R^{12}$ ein Wasserstoffatom, eine Alkanoylgruppe von 2 bis 4 C-Atomen oder die Benzoyl- oder 3-(ß-Chlorethylsulfonyl)-benzoyl-Gruppe ist,

$R^{13}$ ein Wasserstoffatom oder ein Brom- oder Chloratom oder die Methyl-, Methoxy-, Carboxy- oder Sulfogruppe ist,

$R^{14}$ ein Wasserstoffatom, ein Chloratom, die Methyl-, Methoxy- oder Sulfogruppe ist und

$R^{15}$ ein Wasserstoffatom oder die Sulfogruppe ist.

8. Verbindung nach mindestens einem der Ansprüche 1 bis 7, dadurch gekennzeichnet, daß Y beide die Vinylgruppe oder die ß-Sulfatoethyl-Gruppe bedeuten.

9. Verfahren zur Herstellung einer Azoverbindung entsprechend der in Anspruch 1 genannten und definierten allgemeinen Formel (1), dadurch gekennzeichnet, daß man das Diazoniumsalz einer Aminoverbindung der allgemeinen Formel (13)

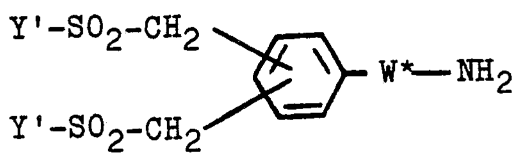

(13)

in welcher W* die in Anspruch 2 genannte Bedeutung besitzt und Y′ eine der Bedeutungen von Y hat oder die ß-Hydroxyethyl-Gruppe ist, mit einer Kupplungskomponente der allgemeinen Formel (14)

$H(A - N = N)_v - K$ (14)

in welcher A, v und K die in Anspruch 1 genannten Bedeutungen haben, kuppelt und im Falle, daß Y′ für die ß-Hydroxyethyl-Gruppe steht, die erhaltene Azoverbindung in eine Verbindung der Formel (1) mit der Bedeutung von Y überführt und gegebenenfalls eine weitere Umwandlungsreaktion anschließt, oder daß man statt einer Kupplungskomponente der Formel (14) ein kupplungsfähiges Vorprodukt der Azoverbindung der Formel (1) einsetzt und die erhaltene Azoverbindung durch eine weitere Kupplungsreaktion bzw. weitere Kupplungsreaktionen oder sonstige Umwandlungsreaktionen in die Azoverbindung der Formel (1) überführt.

10. Verfahren nach Anspruch 9 zur Herstellung einer Disazoverbindung der allgemeinen Formel (16)

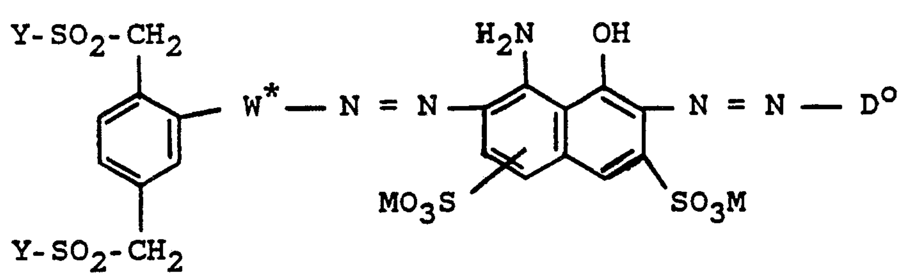

(16)

in welcher Y und W* die in Anspruch 1 bzw. Anspruch 2 genannten Bedeutungen haben, M ein Wasserstoffatom oder ein Alkalimetall ist und D° einen Benzolrest oder einen Naphthalinrest bedeutet, die beide durch in der Azochemie übliche Substituenten substituiert sein können, und bevorzugt ein Rest $D^3$ der in Anspruch 6 genannten Definition ist,
dadurch gekennzeichnet, daß man eine Monoazoverbindung der allgemeinen Formel (17)

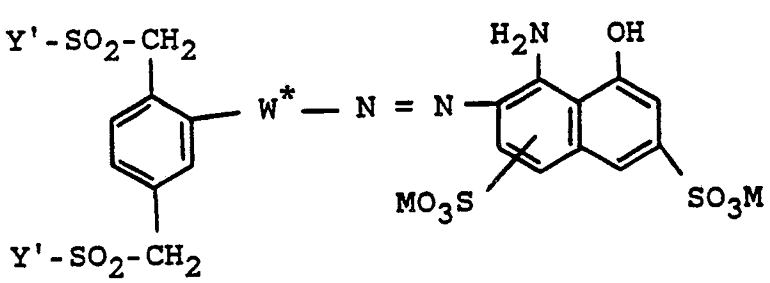

(17)

in welcher W* und M die oben genannten Bedeutungen haben und Y′ eine der in Anspruch 9 genannten Bedeutungen hat, mit dem Diazoniumsalz einer Aminoverbindung der allgemeinen Formel $D^o$-$NH_2$ bzw. $D^3$-$NH_2$ mit D° bzw. $D^3$ der oben genannten Bedeutung kuppelt, wobei D° bzw. $D^3$ auch eine ß-Hydroxyethylsulfonyl-Gruppe entsprechend einer Gruppe der allgemeinen Formel -$SO_2$-Y′ besitzen kann, und daß man im Falle der Verwendung von Ausgangsverbindungen mit einer oder mehreren ß-Hydroxyethylsulfonyl-Gruppen diese in der synthetisierten Disazoverbindung in die Gruppe(n) Y einer der in Anspruch 1 genannten Bedeutung überführt.

11. Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

12. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

Patentansprüche für folgenden Vertragsstaat: ES

1. Verfahren zur Herstellung von Verbindungen der allgemeinen Formel (1) und deren Schwermetallkomplex-Verbindungen

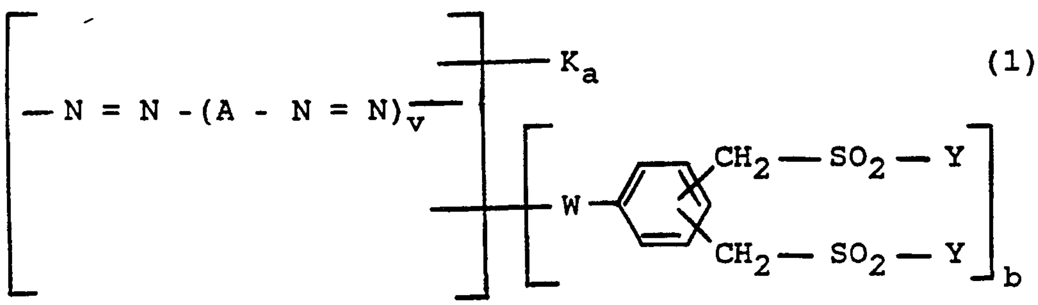

(1)

in welcher bedeuten:
A ist der bivalente Rest einer kupplungsfähigen und diazotierbaren Mittelkomponente der Benzol-, Pyrazolon- oder Naphthalinreihe, der durch in der Azochemie übliche Substituenten substituiert sein kann, wie beispielsweise durch einen oder mehrere Substituenten aus der Gruppe Hydroxy, Amino, Alkyl von 1 bis 4 C-Atomen, Alkoxy von 1 bis 4 C-Atomen, gegebenenfalls substituiertes Alkanoylamino mit 2 bis 4 C-Atomen, gegebenenfalls substituiertes Benzoylamino, Halogen, Carboxy und Sulfo, oder ist der bivalente Rest einer zweifach ankuppelbaren Kupplungskomponente, der durch in der Azochemie übliche Substituenten substituiert sein kann, wie beispielsweise solche der oben genannten Gruppe;
v steht für die Zahl Null oder 1;
K ist der Rest einer Kupplungskomponente der Benzol-, Naphthalin-, Pyrazolon-, 6-Hydroxy-2-pyridon- oder Acetoacetylarylamid-Reihe, der durch in der Azochemie übliche Substituenten substituiert sein kann, wie beispielsweise durch einen oder mehrere Substituenten aus der Gruppe Hydroxy, Amino, Alkyl von 1 bis 4 C-Atomen, Alkoxy von 1 bis 4 C-Atomen, gegebenenfalls substituiertes Alkanoylamino mit 2 bis 4 C-Atomen, gegebenenfalls substituiertes Benzoylamino, Halogen, Carboxy und Sulfo;
W ist eine direkte kovalente Bindung oder eine Gruppe der Formel (2)

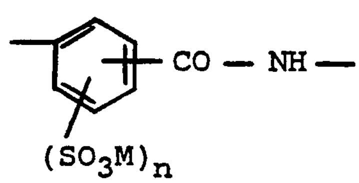

(2)

in welcher M die obengenannte Bedeutung hat und n für die Zahl Null, 1 oder 2 steht,
a steht für die Zahl Null oder 1;
b steht für die Zahl 1 oder 2;
Y ist die Vinylgruppe oder ist die Ethylgruppe, die in ß-Stellung durch einen Substituenten substituiert ist, der mittels Alkali unter Bildung der Vinylgruppe eliminierbar ist;
dadurch gekennzeichnet, daß man das Diazoniumsalz einer Aminoverbindung der allgemeinen Formel (13)

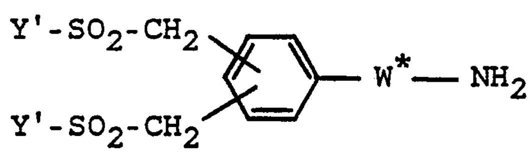

(13)

in welcher W* eine direkte Bindung oder eine Gruppe der allgemeinen Formel (2a)

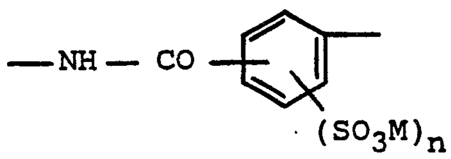

(2a)

mit M und n der oben genannten Bedeutung ist und Y′ eine der Bedeutungen von Y hat oder die ß-Hydroxyethyl-Gruppe ist, mit einer Kupplungskomponente der allgemeinen Formel (14)

$H \{A - N = N\}_v - K$ (14)

in welcher A, v und K die oben genannten Bedeutungen haben, kuppelt und im Falle, daß Y′ für die ß-Hydroxyethyl-Gruppe steht, die erhaltene Azoverbindung in eine Verbindung der Formel (1) mit der Bedeutung von Y überführt und gegebenenfalls eine weitere Umwandlungsreaktion anschließt, oder daß man statt einer Kupplungskomponente der Formel (14) ein kupplungsfähiges Vorprodukt der Azoverbindung der Formel (1) einsetzt und die erhaltene Azoverbindung durch eine weitere Kupplungsreaktion bzw. weitere Kupplungsreaktionen oder sonstige Umwandlungsreaktionen in die Azoverbindung der Formel (1) überführt.

2. Verfahren nach Anspruch 1 zur Herstellung einer Disazoverbindung der allgemeinen Formel (16)

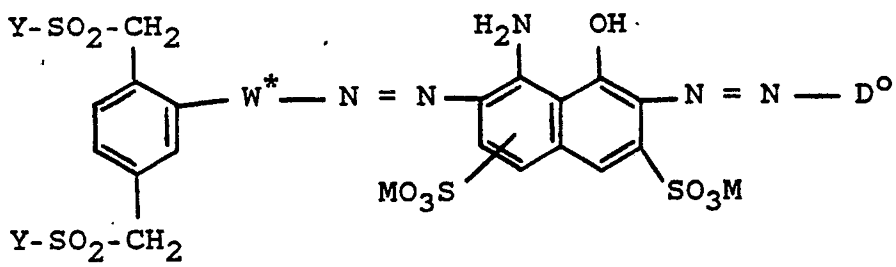

(16)

in welcher Y und W* die in Anspruch 1 genannten Bedeutungen haben, M ein Wasserstoffatom oder ein Alkalimetall ist und D° einen Benzolrest oder einen Naphthalinrest bedeutet, die beide durch in der Azochemie übliche Substituenten substituiert sein können, und bevorzugt ein Rest $D^3$ der in Anspruch 7 genannten Definition ist, dadurch gekennzeichnet, daß man eine Monoazoverbindung der allgemeinen Formel (17)

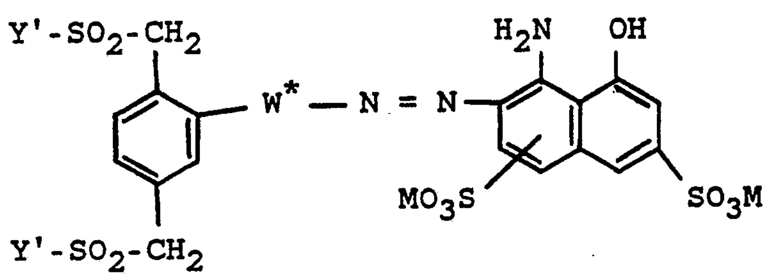

(17)

in welcher W* und M die oben genannten Bedeutungen haben und Y′ eine der in Anspruch 1 genannten Bedeutungen hat, mit dem Diazoniumsalz einer Aminoverbindung der allgemeinen Formel $D^o$-$NH_2$ bzw. $D^3$-$NH_2$ mit D° bzw. $D^3$ der oben genannten Bedeutung kuppelt, wobei D° bzw. $D^3$ auch eine ß-Hydroxyethylsulfonyl-Gruppe entsprechend einer Gruppe der allgemeinen Formel $-SO_2-Y'$ besitzen kann, und daß man im Falle der Verwendung von Ausgangsverbindungen mit einer oder mehreren ß-Hydroxyethylsulfonyl-Gruppen diese in der synthetisierten Disazoverbindung in die Gruppe(n) Y einer der in Anspruch 1 genannten Bedeutung überführt.

3. Verfahren nach Anspruch 1 oder 2, dadurch gekennzeichnet, daß die Verbindung der allgemeinen Formel (1) eine Verbindung der allgemeinen Formel (3a) oder (3b)

$D - N = N \{E - N = N\}_v - K$ (3a)

$D^o - N = N - G - N = N - D^o$ (3b)

und eine davon abgeleitete Schwermetallkomplex-Verbindung ist,

wobei in diesen Formeln bedeuten:
K und v haben die in Anspruch 1 genannten Bedeutungen;
D ist der Rest der allgemeinen Formel (4)

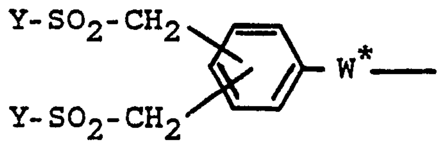

(4)

in welcher Y die in Anspruch 1 genannte Bedeutung hat und W* eine direkte Bindung oder eine Gruppe der allgemeinen Formel (2a)

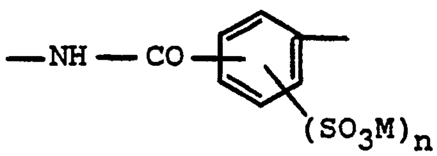

(2a)

mit M und n der in Anspruch 1 genannten Bedeutung ist;
E ist der Rest einer kupplungs- und diazotierbaren Verbindung, die zum Aufbau von Disazoverbindungen mit Farbstoffeigenschaften eingesetzt wird und die der Benzol-, Pyrazolon- oder Naphthalinreihe angehört und durch einen oder mehrere Substituenten aus der Gruppe Hydroxy, Amino, Alkyl von 1 bis 4 C-Atomen, Alkoxy von 1 bis 4 C-Atomen, gegebenenfalls substituiertes Alkanoylamino mit 2 bis 4 C-Atomen, gegebenenfalls substituiertes Benzoylamino oder Ureido, Halogen, Carboxy und Sulfo substituiert sein kann;
D° stellt jedes, zueinander gleich oder voneinander verschieden, einen Rest der oben definierten Gruppe D dar, oder einer der Reste D° ist eine Gruppe D und der andere Rest D° ist ein Benzolrest oder ein Naphthalinrest, die beide durch in der Azochemie übliche Substituenten, wie beispielsweise einen oder mehrere Substituenten aus der Gruppe Hydroxy, Alkyl von 1 bis 4 C-Atomen, Alkoxy von 1 bis 4 C-Atomen, Alkanoylamino mit 2 bis 4 C-Atomen, gegebenenfalls substituiertes Benzoylamino, Halogen, Nitro, Carboxy und Sulfo und/oder durch eine oder zwei faserreaktive Gruppen, wie beispielsweise aus der heterocyclischen Reihe oder Gruppen der Formel $-SO_2-Y$ mit Y einer der oben genannten Bedeutungen, substituiert sein können;
G ist der bivalente Rest einer zweifach kuppelbaren Kupplungskomponente der Benzol- oder Naphthalinreihe, der durch Hydroxy- und/oder Aminogruppen substituiert ist und durch weitere Substituenten, wie beispielsweise einen oder mehrere Substituenten aus der Gruppe Alkyl von 1 bis 4 C-Atomen, Alkoxy von 1 bis 4 C-Atomen, Sulfo, Carboxy, Ureido, Alkanoylamino mit 2 bis 4 C-Atomen und Halogen substituiert sein kann.

4. Verfahren nach Anspruch 1 oder 2, dadurch gekennzeichnet, daß die Verbindung der allgemeinen Formel (1) eine Verbindung entsprechend der allgemeinen Formel (5a)

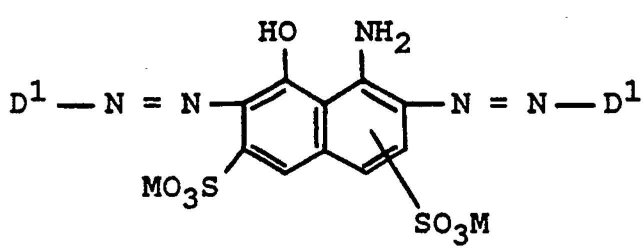

(5a)

ist, in welcher
M ein Wasserstoffatom oder ein Alkalimetall ist und
$D^1$ jedes, zueinander gleich oder voneinander verschieden, ein Rest der allgemeinen Formel (4)

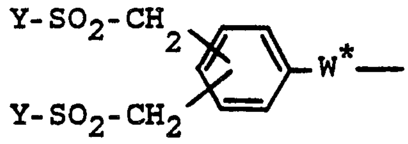

(4)

in welcher Y und W* die in Anspruch 1 genannten Bedeutungen haben, ist oder der eine Rest $D^1$ eine Gruppe der allgemeinen Formel (4) ist und der andere Rest $D^1$ ein Rest der allgemeinen Formel (6a), (6b) oder (6c)

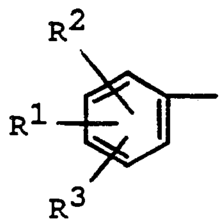

(6a)

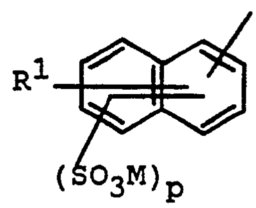

(6b)

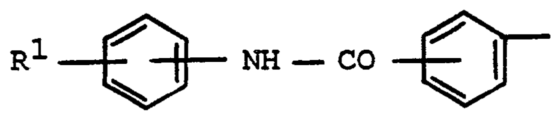

(6c)

ist, in welchen
$R^1$ ein Wasserstoffatom oder eine Sulfogruppe oder eine Gruppe der Formel $Y\text{-}SO_2\text{-}$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet (wobei diese Gruppe im Falle von p gleich Null ein Wasserstoffatom bedeutet) und
M die obengenannte Bedeutung hat.

5. Verfahren nach Anspruch 1, dadurch gekennzeichnet, daß die Verbindung der allgemeinen Formel (1) eine Verbindung entsprechend der allgemeinen Formel (5b)

$D - N = N -(E^1 - N = N)_v - K$ (5b)

ist, in welcher
D ein Rest der allgemeinen Formel (4)

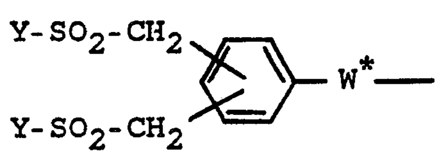

(4)

mit Y und W* der in Anspruch 1 genannten Bedeutungen ist,
$E^1$ ein Rest der allgemeinen Formel (7a), (7b), (7c) oder (7d)

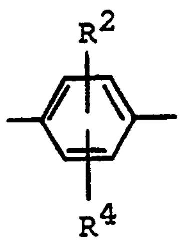

(7a)

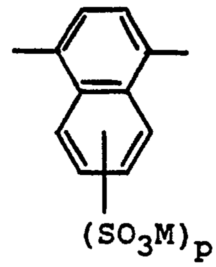

(7b)

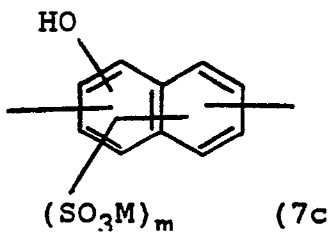

(7c)

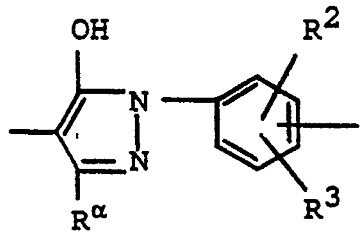

(7d)

in welchen

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$ Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^4$ ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N′-Phenyl-ureidogruppe, eine N′-Alkyl-ureidogruppe mit 1 bis 4 C-Atomen im Alkylrest, eine Phenylsulfonylgruppe oder eine Alkylsulfonylgruppe von 1 bis 4 C-Atomen ist,

M ein Wasserstoffatom oder ein Alkalimetall ist,

p die Zahl Null, 1 oder 2 bedeutet (wobei diese Gruppe im Falle von p gleich Null ein Wasserstoffatom bedeutet),

m die Zahl 1 oder 2 bedeutet und

$R^\alpha$ für Wasserstoff, Alkyl von 1 bis 4 C-Atomen, Cyano, Carboxy, Carbalkoxy von 2 bis 5 C-Atomen, Carbamoyl oder Phenyl steht,

v ist die Zahl 1 oder 2;

K ist ein Rest der allgemeinen Formel (9a) bis (9g)

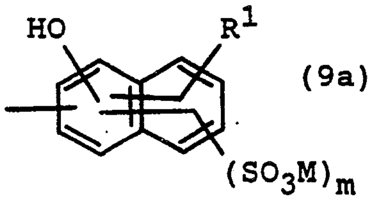

(9a)

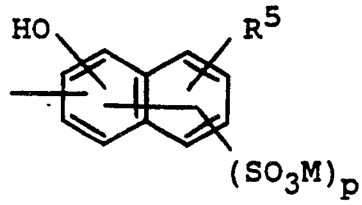

(9b)

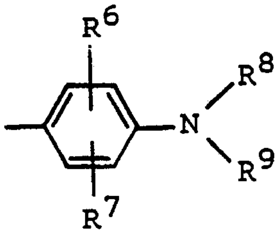

(9c)

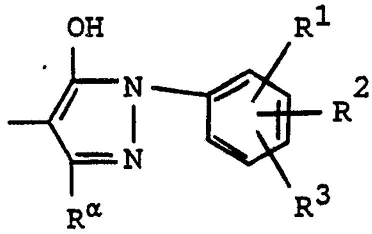

(9d)

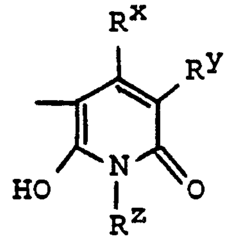

(9e)

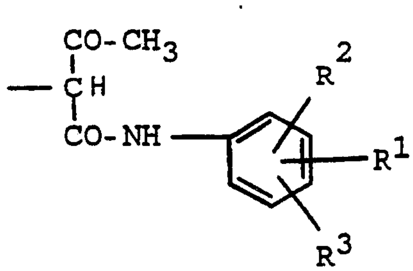

(9f)

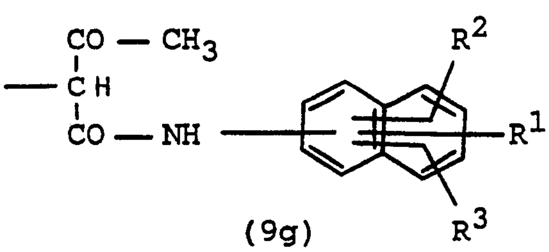

(9g)

in welchen

$R^1$ ein Wasserstoffatom oder eine Sulfogruppe oder eine Gruppe der Formel Y-$SO_2$- mit Y der in Anspruch 1 genannten Bedeutung ist,

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^\alpha$ für Wasserstoff, Alkyl von 1 bis 4 C-Atomen, Cyano, Carboxy, Carbalkoxy von 2 bis 5 C-Atomen, Carbonamido oder Phenyl steht,

M ein Wasserstoffatom oder ein Alkalimetall ist,

m die Zahl 1 oder 2 bedeutet,

p für die Zahl Null, 1 oder 2 steht (wobei diese Gruppe im Falle von p gleich Null ein Wasserstoffatom bedeutet),

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy und/oder durch -$SO_2$-Y mit Y obiger Bedeutung substituiertes Benzoylamino ist,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureido ist,

$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,

$R^9$ Alkyl von 1 bis 4 C-Atomen, das durch Hydroxy, Cyan, Carboxy, Sulfo, Sulfato, Methoxycarbonyl,

Ethoxycarbonyl oder Acetoxy substituiert sein kann, ist oder Benzyl oder Phenyl oder durch Alkyl von 1 bis 4 C-Atomen, Alkoxy von 1 bis 4 C-Atomen, Chlor und/oder Sulfo substituiertes Phenyl ist,

$R^x$ Wasserstoff oder Alkyl von 1 bis 4 C-Atomen oder durch Alkoxy von 1 bis 4 C-Atomen oder Cyano substituiertes Alkyl von 1 bis 4 C-Atomen ist,

$R^y$ Wasserstoff, Sulfo oder Sulfoalkyl mit einem Alkylenrest von 1 bis 4 C-Atomen oder Cyano oder Carbamoyl ist und

$R^z$ Wasserstoff oder Alkyl von 1 bis 6 C-Atomen, das durch Phenyl, Sulfo, Sulfato, Carboxy, Sulfophenyl, Hydroxy, Amino, Methoxy, Ethoxy, Acetylamino, Benzoylamino oder Cyano substituiert sein kann, ist oder Cyclohexyl, Phenyl oder durch Carboxy, Sulfo, Benzoylamino, Acetylamino, Methyl, Methoxy, Cyano und/oder Chlor substituiertes Phenyl ist.

6. Verfahren nach Anspruch 1, dadurch gekennzeichnet, daß die Verbindung der allgemeinen Formel (1) eine Verbindung entsprechend der allgemeinen Formel (5c)

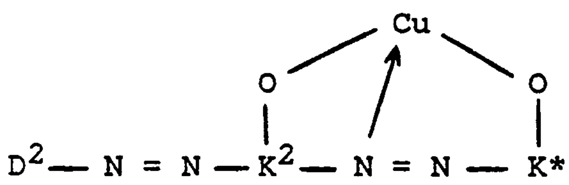

(5c)

ist, in welcher bedeuten:

D und v haben die im Anspruch 5 genannten Bedeutungen;

$K^2$ ist ein Rest der allgemeinen Formel (8a) oder (8b)

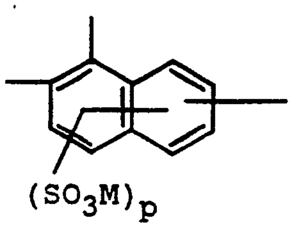

(8a)

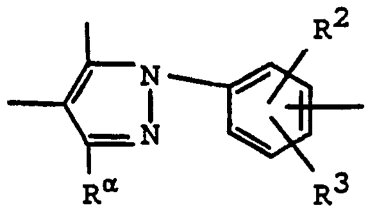

(8b)

in welchen M, p, $R^2$, $R^3$ und $R^\alpha$ die in Anspruch 5 genannten Bedeutungen haben;

$K^*$ hat einen der in Anspruch 5 genannten Bedeutungen von K, sofern K in Nachbarstellung zur Kupplungsstelle eine Hydroxygruppe besitzt.

7. Verbindung nach Anspruch 1 oder 2, dadurch gekennzeichnet, daß die Verbindung der allgemeinen Formel (1) eine Verbindung entsprechend der allgemeinen Formel (10a)

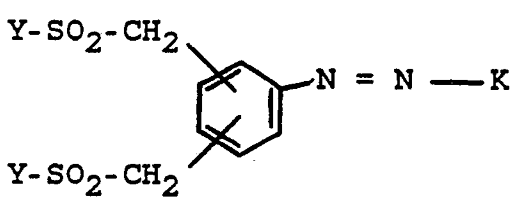

(10a)

ist, in welcher

Y eine der in Anspruch 1 genannten Bedeutungen hat und

K der 2-Sulfo-5-acetylamino-4-amino-phenyl-Rest oder ein Rest der allgemeinen Formel (11b), (11c), (11d), (11e), (11f) oder (11g)

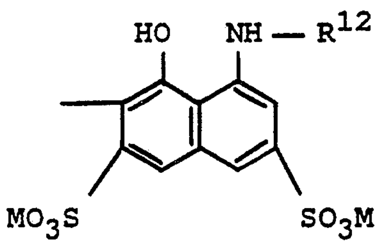

(11b)

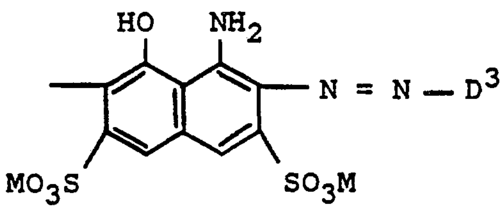

(11c)

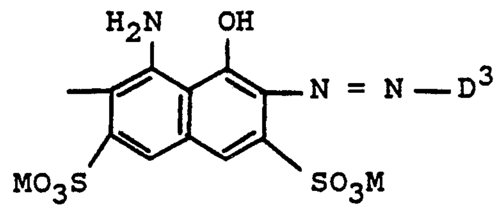

(11d)

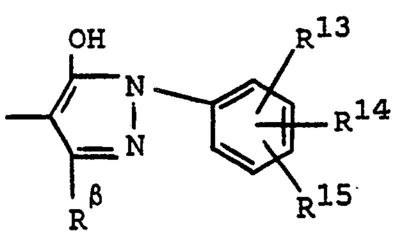

(11e)

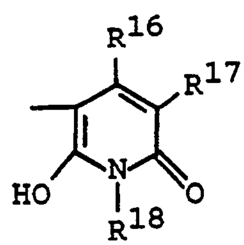

(11f)

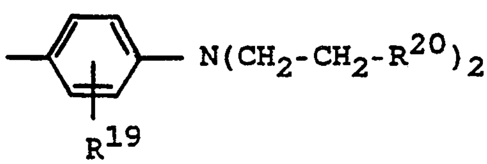

(11g)

ist, in welchen bedeuten:

M ist ein Wasserstoffatom oder ein Alkalimetall;

$R^{12}$ ist ein Wasserstoffatom, eine Alkanoylgruppe von 2 bis 4 C-Atomen oder die Benzoyl- oder 3-(ß-Chlorethylsulfonyl)-benzoyl-Gruppe;

$D^3$ ist eine Gruppe entsprechend der obengenannten und definierten allgemeinen Formeln (6a) und (6b)

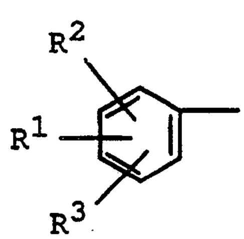

(6a)

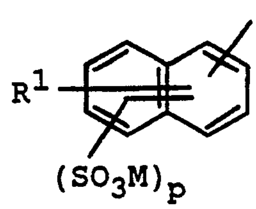

(6b)

in welchen

$R^1$ ein Wasserstoffatom oder eine Sulfogruppe oder eine Gruppe der Formel $Y-SO_2-$ mit Y der oben genannten Bedeutung ist,

$R^2$ Wasserstoff, Methyl, Ethyl, Methoxy, Ethoxy, Alkanoyl von 2 bis 5 C-Atomen, Cyano, Carboxy, Sulfo,

Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet (wobei diese Gruppe im Falle von p gleich Null ein Wasserstoffatom bedeutet) und
M ein Wasserstoff oder ein Alkalimetall ist;
$R^{\beta}$ ist die Methylgruppe oder die Carboxygruppe;
$R^{13}$ ist ein Wasserstoffatom oder ein Brom- oder Chloratom oder die Methyl-, Methoxy-, Carboxy- oder Sulfogruppe;
$R^{14}$ ist ein Wasserstoffatom, ein Chloratom, die Methyl-, Methoxy- oder Sulfogruppe;
$R^{15}$ ist ein Wasserstoffatom oder die Sulfogruppe;
$R^{16}$ ist ein Wasserstoffatom oder eine Alkylgruppe von 1 bis 4 C-Atomen, oder der Phenylrest;
$R^{17}$ ist ein Wasserstoffatom oder die Cyano-, Carbamoyl-oder Sulfomethylgruppe;
$R^{18}$ ist ein Wasserstoffatom oder eine Alkylgruppe von 1 bis 4 C-Atomen, die durch eine Sulfogruppe substituiert sein kann, oder ist ein Phenylrest, der durch eine oder zwei Sulfogruppen substituiert sein kann;
$R^{19}$ ist ein Wasserstoffatom oder ein Chloratom;
$R^{20}$ ist die Hydroxy-, Sulfato- oder Sulfogruppe.

8. Verfahren nach Anspruch 1, dadurch gekennzeichnet, daß die Verbindung der allgemeinen Formel (1) eine Verbindung entsprechend der allgemeinen Formel (10b)

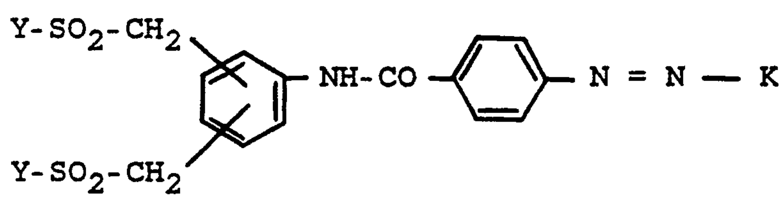

(10b)

ist, in welcher
Y die in Anspruch 1 genannte Bedeutung besitzt und
K einen Rest der allgemeinen Formel (11b) oder (11e)

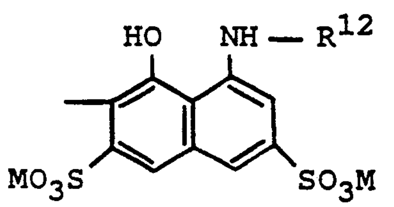

(11b)

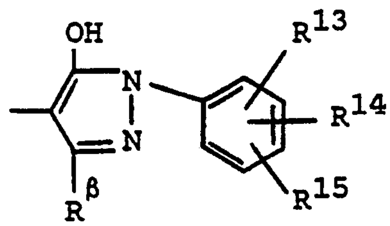

(11e)

bedeutet, in welchen
M ein Wasserstoffatom oder Alkalimetall ist,
$R^{\beta}$ die Methylgruppe oder die Carboxygruppe ist,
$R^{12}$ ein Wasserstoffatom, eine Alkanoylgruppe von 2 bis 4 C-Atomen oder die Benzoyl- oder 3-(ß-Chlorethylsulfonyl)-benzoyl-Gruppe ist,
$R^{13}$ ein Wasserstoffatom oder ein Brom- oder Chloratom oder die Methyl-, Methoxy-, Carboxy- oder Sulfogruppe ist,
$R^{14}$ ein Wasserstoffatom, ein Chloratom, die Methyl-, Methoxy- oder Sulfogruppe ist und
$R^{15}$ ein Wasserstoffatom oder die Sulfogruppe ist.

9. Verfahren nach mindestens einem der Ansprüche 1 bis 8, dadurch gekennzeichnet, daß Y beide die Vinylgruppe oder die ß-Sulfatoethyl-Gruppe bedeuten.

10. Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

11. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

Europäisches Patentamt

# EUROPÄISCHER RECHERCHENBERICHT

Nummer der Anmeldung

EP 90102357.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| X | DE - A1 - 3 134 357 (HOECHST AG) * Seite 5, Zeilen 12-30; Seite 6, Zeilen 28-32; Seite 8, Zeilen 13-27; Seite 9, Zeile 22 - Seite 10, Zeile 10; Seite 13, Zeile 27 - Seite 14, Zeile 12 * | 1,2,6, 8,9, 11,12 | C 09 B 62/507<br>D 06 P 1/384 |
| X | WO - A1 - 86/00 632 (SANDOZ AG) * Ansprüche 1,2,4,5,7-10 * | 1,2, 4-6,8, 9,11, 12 | |
| D,A | EP - A2/A3 - 0 181 585 (HOECHST AKTIENGESELLSCHAFT) * Ansprüche 1,5,8,16-19 * | 1,2,6, 8,9, 11,12 | |
| A | DE - A1 - 3 703 565 (HOECHST AG) * Ansprüche 1-3,6-14 * | 1,7-9 | |
| A | EP - A2/A3 - 0 149 170 (CIBA-GEIGY AG) * Patentansprüche * | 1,3, 9-12 | |

RECHERCHIERTE SACHGEBIETE (Int. Cl.5)

C 09 B
D 06 P

Der vorliegende Recherchenbericht wurde für alle Patentansprüche erstellt.

| Recherchenort | Abschlußdatum der Recherche | Prüfer |
|---|---|---|
| WIEN | 27-04-1990 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82